# EUROPÄISCHE PATENTSCHRIFT

(11) **EP 3 812 294 B1**
(45) Veröffentlichungstag und Bekanntmachung des Hinweises auf die Patenterteilung: **22.05.2024**
(21) Anmeldenummer: 20211839.4
(22) Anmeldetag: 21.08.2018
(51) Int. Cl.: B65D 30/08, B65D 33/02, B65D 33/10

(54) **KUNSTSTOFFTRAGETASCHE**
PLASTIC BAG
SAC À POIGNÉE EN MATIÈRE PLASTIQUE

(30) Priorität: 28.08.2017 DE 202017105180 U
(43) Veröffentlichungstag der Anmeldung: 28.04.2021
(62) Teilanmeldung aus: 18189980.8
(73) Patentinhaber: Papier-Mettler KG, 54497 Morbach (DE)
(72) Erfinder: DONNER, Georg, 54497 Morbach (DE); TROSSEN, Wolfgang, 54497 Morbach (DE)
(74) Vertreter: Metten, Karl-Heinz

(56) Entgegenhaltungen:
- EP-A1- 0 457 019
- EP-A1- 0 758 613
- EP-B1- 0 457 019
- DE-A1- 1 457 232
- DE-A1- 2 853 061
- DE-A1- 3 144 702
- DE-A1- 4 012 897
- DE-T2- 69 009 906
- DE-U1- 8 705 849
- DE-U1- 29 612 070
- DE-U1-202005 010 674
- FR-A5- 2 164 047
- KR-A- 20170 005 995
- NL-A- 7 000 483

## Beschreibung

Die vorliegende Erfindung betrifft eine wiederverwendbare Kunststofftragetasche.

Tragetaschen, wie sie üblicherweise vom Handel für den Kunden zum Transport von Waren zur Verfügung gestellt werden, sind regelmäßig aus Plastik oder Papier gefertigt. Waren diese Transportbehältnisse bislang vielfach für den einmaligen Gebrauch vorgesehen, werden nunmehr verstärkt geeignete Transportgebinde nachgefragt, die wiederverwendet werden können. Hierbei sind wiederverwendbare Kunststofftragetaschen häufig größer dimensioniert und verfügen über separat an Vorder- und Rückwand angebrachte Trageschlaufen. Solche herkömmlichen Schlaufentaschen finden sich beispielsweise in der DE 101 16 920 Al, der WO 01/51372 A1 und der DE 40 12 897 A1 offenbart.

EP 0 457 019 A1 betrifft eine aus thermoplastischem Kunststoff gefertigte Tragetasche mit unterschiedlich langen nach innen eingeklappten Randbereichen und dort angebrachten Trageschlaufen. Die Tragetasche soll sich durch eine einfache und kostengünstige Herstellweise und Entsorgbarkeit auszeichnen.

DE 14 57 232 A1 betrifft eine widerstandsfähige, aus thermoplastischem Kunststoff gefertigte, doppellagige Tragetasche mit nach innen gefalteten Tragetaschenrändern bestehend aus drei und mehr Lagen, in die ein Tragegriff integriert ist.

Insbesondere bei größer dimensionierten wiederverwendbaren Kunststofftragetaschen kann mitunter eine hinreichende Belastbarkeit bzw. Tragefestigkeit aufgrund mechanischen Verschleißes problematisch sein. Dabei ist ein gewichtsbedingtes Ab- oder Durchrei-ßen einer Trageschlaufe oder im Bereich der Anbringung der Trageschlaufe nicht hinnehmbar. Nicht zuletzt aus diesem Grund stellen die gewerblichen Abnehmer von Schlaufentragetaschen, beispielsweise Kaufhäuser und Großmarktketten, sehr hohe Anforderungen an die Qualität solcher Taschen. Nachteilig an den bekannten größer dimensionierten Schlaufentragetaschen ist noch stets deren recht aufwendige Herstellung.

Der vorliegenden Erfindung lag daher die Aufgabe zugrunde, Tragetaschen aus Kunststoff, insbesondere wiederverwendbare Kunststofftragetaschen, zur Verfügung zu stellen, die nicht mit den Nachteilen der Tragetaschen des Stands der Technik behaftet und die insbesondere für den wiederholten zuverlässigen Transport schwerer Lasten geeignet sind und die sich zudem auf einfache und kostengünstige Weise in maschineller Serienfertigung herstellen lassen.

Demgemäß wurde eine Kunststofftragetasche mit einem geschlossenen oder im Wesentlichen geschlossenen Bodenende und einem gegenüberliegenden Öffnungsende gefunden, umfassend eine Vorderwand und eine Rückwand, jeweils mit einem ersten Seitenrand und einem gegenüberliegenden zweiten Seitenrand sowie einem Öffnungsrand und einem Bodenrand, wobei die Vorderwand und die Rückwand im Bereich ihrer ersten und zweiten Seitenränder und ihrer Bodenränder mindestens abschnittsweise direkt oder über Seitenwände und/oder Seitenfalten und/oder eine Bodenfalte miteinander verbunden sind, sowie mindestens eine mit der Vorderwand und/oder mindestens eine mit der Rückwand verbundene Halteschlaufe mit jeweils einem ersten und einem zweiten Anbindungsbereich, wobei die Vorder- und Rückwand mehrlagig, insbesondere doppellagig, ausgestaltet ist, umfassend mindestens eine innenliegende Lage, insbesondere eine Innenlage, und eine Außenlage, und wobei die Vorder- und Rückwand im Bereich des Öffnungsendes einen sich bis zum Öffnungsende erstreckenden oder dieses umfassenden Verstärkungsbereich aufweist, enthaltend mindestens einen innenseitig an der Vorderwand befestigten und mindestens einen innenseitig an der Rückwand befestigten und sich von oder beabstandet von dem ersten Seitenrand in Richtung des oder bis zum zweiten Seitenrand erstreckenden mehrlagigen, insbesondere doppellagigen, Kunststofffolienstreifen, wobei sich an die Außenlage ein Fortsetzungsabschnitt anschließt, wobei die Außenlage und der Fortsetzungsabschnitt der Vorderwand und der Rückwand einstückig ausgebildet sind, wobei der Fortsetzungsabschnitt den Kunststofffolienstreifen des Verstärkungsbereichs darstellt, wobei der Fortsetzungsabschnitt sich mindestens abschnittsweise entlang der Innenseite der mindestens einen innenliegenden Lage erstreckt und an dieser anliegt, wobei der an der Innenseite der mindestens einen innenliegenden Lage vorliegende Fortsetzungsabschnitt mittels Umschlagens zumindest bereichsweise mindestens doppellagig ausgestaltet ist, wobei dieser Fortsetzungsabschnitt entlang einer Erstreckung von oder beabstandet von dem ersten Seitenrand in Richtung des oder bis zum zweiten Seitenrand mit der Innenseite der mindestens einen innenliegenden Lage verschweißt ist, wobei die ersten und zweiten Anbindungsbereiche der mit der Vorderwand verbundenen Halteschlaufe und die ersten und zweiten Anbindungsbereiche der mit der Rückwand verbundenen Halteschlaufe an der Innenseite von Vorder- bzw. Rückwand im Bereich des mehrlagigen Kunststofffolienstreifens des Verstärkungsbereichs vorliegen, wobei der mehrlagige Kunststofffolienstreifen des Verstärkungsbereichs von Vorder- und Rückwand über seine sämtlichen Lagen mit der Innenseite der mindestens einen innenliegenden Lage entlang der Erstreckung von oder beabstandet von dem ersten Seitenrand in Richtung des oder bis zum zweiten Seitenrand unter Ausbildung eines ersten Verbindungsstreifens verschweißt ist, wobei die Außenlage von Vorder- und Rückwand mit der Außenseite der mindestens einen innenliegenden Lage entlang der Erstreckung von oder beabstandet von dem ersten Seitenrand in Richtung des oder bis zum zweiten Seitenrand unter Ausbildung eines zweiten Verbindungsstreifens verschweißt ist, wobei die ersten und zweiten Anbindungsbereiche der mit der Vorderwand und mit der Rückwand verbundenen Halteschlaufen beabstandet von dem ersten oder zweiten Verbindungstreifen vorliegen, wobei der erste und der zweite Verbindungsstreifen mindestens abschnittsweise im Wesentlichen überlappend vorliegen, wobei die mit der Vorderwand und die mit der Rückwand verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage und der Außenlage verschweißt ist, wobei der erste Verbindungsstreifen näher beabstandet zum unteren Rand des Verstärkungsbereichs als zu dessen oberen Rand vorliegt und wobei der zweite Verbindungsstreifen näher beabstandet zum unteren Rand des Verstärkungsbereichs als zu dessen oberen Rand vorliegt.

Mit der vorangehend geschilderten erfindungsgemäßen Ausführungsform einer Kunststofftragetasche wird eine Verstärkung im oberen Randbereich verfügbar gemacht, die mechanisch starken Belastungen standhält und eine sehr wirkungsvolle Grundlage für die Anbindung von Halteschlaufen liefert. Auch ist die mit einem derartigen Verstärkungsbereich versehene Kunststofftragetasche bequem und unproblematisch zu öffnen.

In einer bevorzugten Ausführungsform der vorangehend spezifizierten Kunststofftragetasche kann dabei vorgesehen sein, dass die mit der Vorderwand über ihre ersten und zweiten Anbindungsbereiche verbundene Halteschlaufe und/oder die mit der Rückwand über ihre ersten und zweiten Anbindungsbereich verbundene Halteschlaufe im Bereich vom jeweiligen ersten bis zum zweiten Anbindungsbereich zumindest abschnittsweise einen ersten flexiblen, insbesondere schlauchförmigen, Hohlkörper und/oder einen ein- oder mehrlagigen, keinen Hohlkörper bildenden Materialstreifen, insbesondere Kunststoffmaterialstreifen, aufweist, der zumindest abschnittsweise, insbesondere im Wesentlichen vollständig, von einem zweiten flexiblen, insbesondere schlauchförmigen, Hohlkörper umhüllt ist.

Mit der vorangehend geschilderten erfindungsgemäßen Ausführungsform einer Kunststofftragetasche wird neben einem hervorragenden Tragekomfort auch eine verbesserte mechanische Belastbarkeit insbesondere von wiederverwendbaren Kunststofftragetasche sichergestellt. Sowohl die Halteschlaufe als solche wie auch deren Anbindung an den Korpus der Kunststofftragetasche zeichnen sich durch eine besondere Reißfestigkeit aus.

Durch die Kombination der Merkmale, die den Verstärkungsbereich ausbilden, mit den Merkmalen der Halteschlaufe wird eine besonders robuste und belastbare Kunststofftragetasche erhalten.

Auch solche erfindungsgemäßen Kunststofftragetaschen sind von besonderem Vorteil, bei denen die mit der Vorderwand und die mit der Rückwand verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage, insbesondere der Innenlage, und der Außenlage thermoplastisch verschweißt ist. Hierbei hat sich regelmäßig die thermoplastische Verschweißung als besonders geeignet erwiesen, um zu einer reißfesten Anbindung an den Korpus der Kunststofftragetasche, insbesondere an den Verstärkungsbereich, zu gelangen. Besonders gute Ergebnisse stellen sich überraschenderweise dadurch ein, dass die verschweißten bzw. thermoplastisch verschweißten ersten und zweiten Anbindungsbereiche der Halteschlaufen im Verstärkungsbereich keine Überlappung mit weiteren Schweißzonen aufweisen.

Unter einem Verstärkungsbereich im Sinne der vorliegenden Erfindung soll derjenige Abschnitt im Bereich des Öffnungsendes verstanden werden, in dem der mehrlagige, insbesondere doppellagige, Kunststofffolienstreifen vorliegt. In diesem Abschnitt kommt es regelmäßig zu einer Überlappung von Abschnitten der Innen- und der Außenlage von Vorder- bzw. Rückwand mit dem Kunststofffolienstreifen. Auch liegen in diesem überlappenden Abschnitt regelmäßig Verbindungen zwischen diesen einzelnen Lagen bzw. Folien vor.

Die ersten und zweiten Anbindungsbereiche der mit der Vorderwand verbundenen Halteschlaufe und die ersten und zweiten Anbindungsbereiche der mit der Rückwand verbundenen Halteschlaufe liegen bei den erfindungsgemäßen Kunststofftragetaschen an der Innenseite von Vorder- bzw. Rückwand im Bereich des mehrlagigen Kunststofffolienstreifens des Verstärkungsbereichs vor. Diese Anbringung ist insbesondere auch deshalb von Vorteil, als der Verstärkungsbereich der erfindungsgemäßen Kunststofftragetasche innenseitig vorliegt, so dass eine direkte Anbindung der Halteschlaufe über ihre Anbindungsbereiche mit diesem Verstärkungsbereichs erfolgt. Auch kann auf diese Weise verhindert werden, dass die oberen Ränder der Tragetasche beim Einführen von Ware Stoßkanten bilden unter durch Berührung mit der Ware nach innen gedrückt werden und dadurch den Zugang zu der Tasche verkleinern bzw. erschweren. Denn die innenseitig angebrachten Halteschlaufen gestatten es, die oberen Ränder der Tragetasche nach außen zu beugen und so einen Kontakt mit der Ware zu verhindern. Es wird so ein relativ großer Öffnungsbereich sichergestellt.

In einer bevorzugten Ausgestaltung der erfindungsgemäßen Kunststofftragetasche kann vorgesehen sein, dass die mit der Vorderwand und die mit der Rückwand innenseitig verbundene Halteschlaufe jeweils in ihren ersten und zweiten Anbindungsbereichen, direkt oder indirekt, mit dem mehrlagigen Kunststofffolienstreifen des Verstärkungsbereichs und mit der mindestens einen innenliegenden Lage, insbesondere der Innenlage, und der Außenlage verschweißt, insbesondere thermoplastisch verschweißt ist, wobei in diesen ersten und zweiten Anbindungsbereichen zumindest die Innenseite des zweiten Hohlkörpers der Halteschlaufe, insbesondere die nach innen gewandte Seite des zweiten flexiblen Kunststoffmaterialstreifens, mit der Außenseite des ersten Hohlkörpers oder der zugewandten Seite des ein- oder mehrlagigen, keinen Hohlkörper bildenden Materialstreifens, insbesondere der nach außen gewandten Seite des ersten flexiblen Kunststoffmaterialstreifens, verschweißt, insbesondere thermoplastisch verschweißt, und/oder verklebt vorliegen.

Wenn die ersten und zweiten Anbindungsbereiche der Halteschlaufe unmittelbar an dem Kunststofffolienstreifen des Verstärkungsbereichs anliegen, findet die Verbindung mit der mindestens einen innenliegenden Lage, insbesondere der Innenlage, und der Außenlage regelmäßig indirekt, d.h. über die jeweils anliegende benachbarte Lage statt. In einigen Ausgestaltungen kann es beispielsweise bei der Verschweißung, insbesondere der thermoplastischen Verschweißung, zu einer Vermengung des aufgeschmolzenen Materials der beteiligten Lagen kommen, so dass nicht mehr eindeutig eine Zuordnung des Materials zu den Lagen möglich ist.

In einer Weiterentwicklung der erfindungsgemäßen Kunststofftragetaschen können diese über eine erste und eine zweite mit der Vorderwand jeweils über erste und zweite Anbindungsbereiche verbundene Halteschlaufe verfügen, wobei die erste Halteschlaufe zwischen den zugehörigen ersten und zweiten Anbindungsbereichen eine größere Erstreckung aufweist als die zweite Halteschlaufe.

Alternativ und vorzugsweise zusätzlich können diese Kunststofftragetaschen eine erste und eine zweite mit der Rückwand jeweils über erste und zweite Anbindungsbereiche verbundene Halteschlaufe verfügen, wobei die erste Halteschlaufe zwischen den zugehörigen ersten und zweiten Anbindungsbereichen eine größere Erstreckung aufweist als die zweite Halteschlaufe. Auf diese Weise kann eine Halteschlaufe beziehungsweise ein Paar an Halteschlaufen zum Tragen mit der Hand und eine weitere Halteschlaufe bzw. ein Paar an Halteschlaufen zum Tragen der Kunststofftragetasche über der Schulter zur Verfügung gestellt werden. Die ersten und zweiten Anbindungsbereiche der ersten und zweiten Halteschlaufen von Vorderwand und/oder Rückwand können dabei deckungsgleich übereinander liegen bzw. in einem Arbeitsgang gefertigt sein oder jeweils getrennt voneinander vorliegen. Bei der letztgenannten Ausführungsform hat es sich als vorteilhaft erwiesen, wenn die ersten und zweiten Anbindungsbereiche der kürzeren Halteschlaufe, das heißt der Halteschlaufe mit der geringeren Erstreckung zwischen diesen Anbindungsbereichen, zwischen den ersten und zweiten Anbindungsbereichen der längeren Halteschlaufe auf der Vorder- bzw. Rückwand vorliegen.

Hinsichtlich der Halteschlaufen der erfindungsgemäßen Kunststofftragetaschen sind solche bevorzugt, bei denen der erste flexible, insbesondere schlauchförmige, Hohlkörper aus einem ersten flexiblen Kunststoffmaterialstreifen mit gegenüberliegenden ersten und zweiten Längsseitenrändern gebildet ist, dessen gegenüberliegende erste und zweite Längsseitenränder in einem Überlappungsbereich miteinander verschweißt, insbesondere thermoplastisch verschweißt, sind und/oder, vorzugsweise und, bei denen der zweite flexible, insbesondere schlauchförmige, Hohlkörper aus einem zweiten flexiblen Kunststoffmaterialstreifen mit gegenüberliegenden ersten und zweiten Längsseitenrändern gebildet ist, dessen gegenüberliegende erste und zweite Längsseitenränder in einem zweiten Überlappungsbereich miteinander verschweißt, insbesondere thermoplastisch verschweißt, sind.

Die ersten und zweiten flexiblen Kunststoffmaterialstreifen, beispielsweise in Form von Polyolefinfolienstreifen, insbesondere Polyethylenfolienstreifen, können in einer bevorzugten Ausgestaltung, wenn flächig ausgebreitet, eine Rechteckform aufweisen. Die Längsränder dieser Materialstreifen können dann unter Ausbildung der ersten bzw. zweiten insbesondere schlauchförmigen Hohlkörper aufeinander zu bewegt und im Überlappungsbereich miteinander verbunden werden. Hierbei kann der erste Längsseitenrand sowohl ober- wie auch unterhalb des zweiten Längsseitenrandes in einem Überlappungsbereich an diesem zur Anlage gelangen.

Ein besonders hohes Maß an Festigkeit stellt sich hierbei insbesondere auch dadurch ein, dass der erste Kunststoffmaterialstreifen des ersten flexiblen, insbesondere schlauchförmigen, Hohlkörpers und der zweite Kunststoffmaterialstreifen des zweiten flexiblen, insbesondere schlauchförmigen, Hohlkörpers zumindest abschnittsweise, insbesondere entlang der ersten und zweiten Überlappungsbereiche, miteinander verschweißt, insbesondere thermoplastisch verschweißt, sind.

Vielfach hat es sich als zweckmäßig erwiesen, die Verschweißung von erstem und zweitem Kunststoffmaterialstreifen im ersten und bzw. zweiten Überlappungsbereich in einem einzigen Verfahrensschritt, d.h. im Wesentlichen gleichzeitig vorzunehmen. Hierdurch entsteht eine sich entlang der insbesondere schlauchförmigen Halteschlaufe erstreckende einheitliche Schweißnaht. Diese Ausführungsform hat den weiteren Vorteil, dass der erste und der zweite flexible Hohlkörper in dem Bereich dieser einheitlichen Schweißnaht, insbesondere thermoplastisch verschweißt, miteinander verbunden vorliegen, wodurch eine nochmals gesteigerte mechanische Festigkeit resultiert. Alternativ können der erste und der zweite insbesondere schlauchförmige Hohlkörper auch bereichsweise oder kontinuierlich entlang ihrer gesamten Länge, insbesondere entlang eines Verbindungsstreifens, miteinander verbunden sein, ohne dass die ersten und zweiten Überlappungsbereiche in diesem Anbindungsbereich selber überlappen.

In einer alternativen Ausgestaltung kann hinsichtlich der Verbindung der ersten und zweiten flexiblen Hohlkörper vorgesehen sein, dass der erste flexible, insbesondere schlauchförmige, Hohlkörper aus einem ersten flexiblen Kunststoffmaterialstreifen mit gegenüberliegenden ersten und zweiten Längsseitenrändern gebildet ist und dass der zweite flexible, insbesondere schlauchförmige, Hohlkörper aus einem zweiten flexiblen Kunststoffmaterialstreifen mit gegenüberliegenden ersten und zweiten Längsseitenrändern gebildet ist, wobei in dem Überlappungsbereich von erstem und zweitem Längsseitenrand des ersten flexiblen Kunststoffmaterialstreifens der erste Längsseitenrand des ersten Kunststoffmaterialstreifens mit dem ersten Längsseitenrand des zweiten Materialstreifens und dieser erste Längsseitenrand des zweiten Kunststoffmaterialstreifens mit dem zweiten Längsseitenrand des ersten Kunststoffmaterialstreifens verschweißt, insbesondere thermoplastisch verschweißt, sind und wobei in dem Überlappungsbereich von erstem und zweitem Längsseitenrand des zweiten flexiblen Kunststoffmaterialstreifens der zweite Längsseitenrand des ersten Kunststoffmaterialstreifens mit dem zweiten Längsseitenrand des zweiten Materialstreifens und dieser zweite Längsseitenrand des ersten Kunststoffmaterialstreifens mit dem ersten Längsseitenrand des zweiten Kunststoffmaterialstreifens verschweißt, insbesondere thermoplastisch verschweißt, sind.

Für viele Anwendungen hatte sich als zweckmäßig erwiesen, auf solche Kunststofftragetaschen zurückzugreifen, bei denen die erste Halteschlaufe enthaltend die ersten und zweiten flexiblen, insbesondere schlauchförmigen, Hohlkörper und/oder die zweite Halteschlaufe enthaltend die ersten und zweiten flexiblen, insbesondere schlauchförmigen, Hohlkörper unter Ausbildung von zwei gegenüberliegenden Längsfaltkanten flächig gepresst vorliegen, wobei vorzugsweise die Überlappungsbereiche der gegenüberliegenden ersten und zweiten Längsseitenränder von erstem und zweitem flexiblen Kunststoffmaterialstreifen der ersten und zweiten flexiblen Hohlkörper von erster und/oder zweiter Halteschlaufe zwischen den sich gegenüberliegenden Längsfaltkanten sowie insbesondere auf derselben Seite vorliegen. Alternativ kann auch vorgesehen sein, dass die erste Halteschlaufe enthaltend den ein- oder mehrlagigen, keinen Hohlkörper bildenden Materialstreifen und den zweiten flexiblen, insbesondere schlauchförmigen, Hohlkörper und/oder die zweite Halteschlaufe enthaltend den ein- oder mehrlagigen, keinen Hohlkörper bildenden Materialstreifen und den zweiten flexiblen, insbesondere schlauchförmigen, Hohlkörper unter Ausbildung von zwei gegenüberliegenden Längsfaltkanten flächig gepresst vorliegen, wobei vorzugsweise der Überlappungsbereich der gegenüberliegenden ersten und zweiten Längsseitenränder von zweitem flexiblen Kunststoffmaterialstreifen der zweiten flexiblen Hohlkörper von erster und/oder zweiter Halteschlaufe zwischen den sich gegenüberliegenden Längsfaltkanten vorliegen. Mit Hilfe der vorangehenden Ausgestaltungen kann die Vorstufe für die Halteschlaufe in einem flachgepressten Zustand auf einer Rolle gewickelt zwischengelagert und bei Bedarf von dieser abgetrennt werden. Auch vermittelt die flächig gepresste Halteschlaufe ein angenehmes Tragegefühl und erlaubt eine gleichmäßige Verteilung der Tragekräfte.

Eine weitere vorteilhafte Ausgestaltung insbesondere auch der vorangehenden Ausführungsform sieht vor, dass im ersten und/oder zweiten Anbindungsbereich von, insbesondere flächig gepresster, erster und/oder zweite Halteschlaufe diejenige Seite der, insbesondere flächig gepressten, Halteschlaufe die Anbindungsseite ist, die nicht die Überlappungsbereiche der gegenüberliegenden ersten und zweiten Längsseitenränder von erstem und zweitem flexiblen Kunststoffmaterialstreifen der ersten und zweiten flexiblen Hohlkörper aufweist. Es hat sich überraschend gezeigt, dass auf diese Weise eine besonders gute mechanische Stabilität und Reißfestigkeit erzielt wird.

Mit den Halteschlaufen für die erfindungsgemäßen Kunststofftragetaschen lassen sich auch derartige Ausführungsformen erstmalig verwirklichen, bei denen der zweite flexible, insbesondere schlauchförmige, Hohlkörper der Halteschlaufe von Vorder- und/oder Rückwand, insbesondere der den zweiten flexiblen, insbesondere schlauchförmigen, Hohlkörper der Halteschlaufe von Vorder- und/oder Rückwand bildende oder enthaltende zweite flexible Kunststoffmaterialstreifen, auf einem mindestens abschnittweise transparenten Kunststoffmaterial, insbesondere Polyethylen, basiert, das mindestens abschnittsweise innenseitig, insbesondere mittels Konterdruckverfahren, bedruckbar oder bedruckt ist. Indem bei der geschilderten Ausgestaltung der Druck innenseitig an dem zweiten Hohlkörper der Halteschlaufe vorliegt, wird dieser beim Tragen, beispielsweise durch Abrieb, nicht beeinträchtigt. Dies gelingt auch mit einer Ausführungsform, bei der der erste flexible, insbesondere schlauchförmige, Hohlkörper oder der ein- oder mehrlagige, keinen Hohlkörper bildende Materialstreifen, insbesondere Kunststoffmaterialstreifen, der Halteschlaufe von Vorder- und/oder Rückwand mindestens abschnittsweise außenseitig bedruckbar oder bedruckt ist und dass der zweite flexible, insbesondere schlauchförmige, Hohlkörper der Halteschlaufe auf einem mindestens abschnittweise transparenten Kunststoffmaterial, insbesondere Polyethylen, basiert oder hieraus besteht. Die vorangehenden Ausgestaltungen der erfindungsgemäßen Kunststofftragetasche gestatten auch, die Halteschlaufe bzw. die Halteschlaufen als Informations- oder Werbemittelträger oder für die Anbringung von Designelementen zu verwenden.

Darüber hinaus kann im Sinne der Erfindung vorgesehen sein, dass die Außenlage auf einem mindestens abschnittweise transparenten Kunststoffmaterial, insbesondere Polyethylen, basiert oder hieraus besteht, das mindestens abschnittsweise innenseitig, insbesondere mittels Konterdruckverfahren, bedruckbar oder bedruckt ist. Ferner umfasst die erfindungsgemäße Kunststofftragetasche alternativ oder zusätzlich mindestens eine innenliegende Lage, insbesondere die Innenlage, die mindestens abschnittsweise außenseitig bedruckbar oder bedruckt ist und wobei die Außenlage auf einem mindestens abschnittweise transparenten Kunststoffmaterial, insbesondere Polyethylen, basiert oder hieraus besteht.

Insbesondere zur Erzeugung einer angenehmen Haptik, welche derjenigen von Textilhalteschlaufen nahekommt, hat es sich als vorteilhaft erwiesen, dass der erste flexible, insbesondere schlauchförmige, Hohlkörper, insbesondere der erste flexible Kunststoffmaterialstreifen, oder der ein- oder mehrlagige, keinen Hohlkörper bildende Materialstreifen und/oder der zweite flexible, insbesondere schlauchförmige, Hohlkörper, insbesondere der zweite flexible Kunststoffmaterialstreifen, der Halteschlaufe von Vorder- und/oder Rückwand mindestens abschnittsweise, insbesondere vollflächig, ein Prägemuster aufweisen. Derartige Prägemuster lassen sich zum Beispiel bei Verwendung thermoplastischer Kunststoffe, beispielsweise von Polyolefinen, durch Einwirkung von Wärme und Druck zuverlässig und dauerhaft erzeugen.

Für die Ausbildung eines besonders vorteilhaften Verstärkungsbereichs ist vorgesehen, dass sich an die Außenlage ein Fortsetzungsabschnitt anschließt, wobei der Fortsetzungsabschnitt den Kunststofffolienstreifen des Verstärkungsbereichs darstellt und wobei der Fortsetzungsabschnitt sich mindestens abschnittsweise entlang der Innenseite der mindestens einen innenliegenden Lage, insbesondere der Innenlage, erstreckt und an dieser anliegt. Dieser, insbesondere mindestens doppellagige, Fortsetzungsabschnitt ist dabei entlang einer Erstreckung von oder beabstandet von dem ersten Seitenrand in Richtung des oder bis zum zweiten Seitenrand mit der Innenseite der mindestens einen innenliegenden Lage, insbesondere der Innenlage, verschweißt, insbesondere mit einer kontinuierlichen Längsschweißung. Eine besonders pragmatische und gleichzeitig ausgeprägte Verstärkung wird auch dadurch erreicht, dass der an der Innenseite der mindestens einen innenliegenden Lage, insbesondere der Innenlage, vorliegende Fortsetzungsabschnitt mittels Umschlagens zumindest bereichsweise mindestens doppellagig ausgestaltet ist.

Für viele Ausführungsformen der erfindungsgemäßen Kunststofftragetaschen hat es sich als pragmatisch erwiesen, den Öffnungsrand durch eine Faltung am oberen Ende der Außenlage oder im Übergangsbereich von der Außenlage zu dem Fortsetzungsabschnitt zu bilden.

Bei den erfindungsgemäßen Kunststofftragetaschen sind die Außenlage und der Fortsetzungsabschnitt der Vorderwand oder der Rückwand einstückig ausgebildet. Außerdem können die Außenlagen von Vorder- und Rückwand einstückig ausgebildet sein. Alternativ oder zusätzlich können zudem die Innenlagen von Vorder- Rückwand einstückig ausgebildet sein. Hierdurch gelangt man überraschenderweise zu Kunststofftragetaschen, die sich auch in der Massenfertigung leicht und zuverlässig herstellen lassen. Auch gestattet die vorangehende Ausführungsform einen effizienten Zugang zu einem sortenreinen Recycling.

Der Fortsetzungsabschnitt kann mittels Umschlagens bzw. Rückfaltens einerseits in der Weise mindestens doppellagig ausgestaltet werden, dass der umgeschlagene Abschnitt nach innen in Richtung der Innenlage im Sinne eines Umbugs umgeschlagen wird. Andererseits kann dies durch Umschlagen bzw. Falten nach außen erfolgen.

In einer zweckmäßigen Ausgestaltung der erfindungsgemäßen Kunststofftragetasche kann dabei auch vorgesehen sein, dass die umgeschlagene bzw. rückgefaltete Lage des mehrlagigen, insbesondere doppellagigen, Kunststofffolienstreifen des Verstärkungsbereichs in Form des Fortsetzungsabschnitts der Außenlage, die an der Innenseite der Innenlage unmittelbar anliegt, in Richtung des Öffnungsendes einen Abschnitt aufweist, der über den oberen Rand der Innenlage hinausgeht, wobei dieser über diesen oberen Rand hinausgehende Abschnitt über diesen oberen Rand der Innenlage umgeschlagen ist und zumindest abschnittsweise an der Außenseite der Innenlage und/oder der Innenseite der Außenlage anliegt oder anlegbar ist. Auf diese Weise gelangt man zu besonders handhabungsfreundlichen wiederverwendbaren Kunststofftragetaschen. So wurde überraschenderweise gefunden, dass sich bei der vorangehend dargestellten Ausführungsform die im noch unbenutzten Zustand aneinander anliegenden oberen Randbereiche von Vorder- und Rückwand besonders leicht voneinander lösen lassen. Auch vermittelt diese Ausführungsform beim Kunden einen sehr hochwertigen Eindruck.

In einer besonders zweckmäßigen Ausführungsform ist der Kunststofffolienstreifen des Verstärkungsbereichs doppellagig ausgeführt, vorzugsweise in einer Weise, dass die umgeschlagene bzw. gefaltete Lage wesentlich kleiner ist als die vorangehende Lage vor dem Umkehrpunkt. Vielfach reicht es aus, wenn der Kunststofffolienstreifen dabei nur in einem Umfang umgeschlagen bzw. rückgefaltet wird, sei es nach innen oder nach außen, dass der dabei erhaltene doppellagige Abschnitt ausreicht, eine Befestigung mit der Innen- bzw. und/oder Außenlage herbeizuführen. Dieser umgeschlagene bzw. gefaltete Endabschnitt kann dabei in der Befestigung/ Verbindung vollständig vorliegen, beispielsweise mittels thermoplastischer Verschweißung, oder aber einen Abschnitt aufweisen, der sich geringfügig über diesen Befestigungsbereich hinaus erstreckt. In gleicher Weise kann vorgesehen sein, dass im Umkehrpunkt des gefalteten bzw. umgeschlagenen Abschnitts die Befestigung bzw. Verbindung, beispielsweise thermoplastische Verschweißung, noch nicht vorliegt. Demgemäß kann in einer bevorzugten Ausgestaltung vorgesehen sein, dass die umgeschlagene Lage des doppellagigen Kunststofffolienstreifens des Verstärkungsbereichs in Form des Fortsetzungsabschnitts der Vorderwand einen umgeschlagenen Endabschnitt darstellt, der sich nicht bis zum oberen Rand von Innen- und/oder Außenlage erstreckt, und dessen Ende in der Befestigung des Fortsetzungsabschnitts mit der Außen- und/oder Innenlage vorliegt oder wobei dieser Endabschnitt zumindest abschnittsweise zusammen in der Befestigung des Fortsetzungsabschnitts mit der Außen- und/oder Innenlage vorliegt und dessen Ende benachbart zu dieser Befestigung vorliegt, insbesondere nicht mehr als 1 cm oder 2 cm beabstandet hierzu. Hierbei kann alternativ oder zusätzlich vorgesehen sein, dass die umgeschlagene Lage des doppellagigen Kunststofffolienstreifens des Verstärkungsbereichs in Form des Fortsetzungsabschnitts der Rückwand einen umgeschlagenen Endabschnitt darstellt, der sich nicht bis zum oberen Rand von Innen- und/oder Außenlage erstreckt, und dessen Ende in der Befestigung des Fortsetzungsabschnitts mit der Außen- und/oder Innenlage vorliegt oder wobei dieser Endabschnitt zumindest abschnittsweise zusammen in der Befestigung des Fortsetzungsabschnitts mit der Außen- und/oder Innenlage vorliegt und dessen Ende benachbart zu dieser Befestigung vorliegt, insbesondere nicht mehr als 1 cm oder 2 cm beabstandet hierzu.

Erfindungsgemäß ist vorgesehen, dass der mehrlagige, insbesondere doppellagige, Kunststofffolienstreifen des Verstärkungsbereichs, insbesondere der mehrlagige, insbesondere doppellagige, Fortsetzungsabschnitt von Vorder- und/oder Rückwand, über seine sämtlichen Lagen mit der Innenseite der mindestens einen innenliegenden Lage, insbesondere der Innenlage, entlang der Erstreckung von oder beabstandet von dem ersten Seitenrand in Richtung des oder bis zum zweiten Seitenrand, insbesondere mit einer kontinuierlichen Längsschweißung, unter Ausbildung eines ersten Verbindungsstreifens verschweißt, insbesondere thermoplastisch verschweißt, ist, wobei dieser erste Verbindungsstreifen näher beabstandet zum unteren Rand des Verstärkungsbereichs als zu dessen oberen Rand vorliegt, insbesondere am oder benachbart zum unteren Rand des Verstärkungsbereichs. Bereits durch Verwendung des ersten Verbindungstreifens, insbesondere wenn in Form einer thermoplastischen Schweißnaht vorliegend, kann ein besonders stabiler Öffnungsrand der erfindungsgemäßen Kunststofftragetasche erhalten werden.

Eine Verbindung bzw. Verschweißung des Kunststofffolienstreifens bzw. des Fortsetzungsabschnitts von Vorder- und/oder Rückwand mit der mindestens einen innenliegenden Lage, insbesondere der Innenlage, beispielsweise der Innenseite der Innenlage, beinhaltet regelmäßig die Verbindung sämtlicher hier aneinander anliegenden Lagen. Das gleiche trifft im Allgemeinen auf die Anbindung des Kunststofffolienstreifens bzw. des Fortsetzungsabschnitts von Vorder- und/oder Rückwand mit der Außenlage zu.

Erfindungsgemäß ist ferner vorgesehen, dass zusätzlich die Außenlage von Vorder- und Rückwand mit der Außenseite der mindestens einen innenliegenden Lage, insbesondere der Innenlage, entlang der Erstreckung von oder beabstandet von dem ersten Seitenrand in Richtung des oder bis zum zweiten Seitenrand, insbesondere mit einer kontinuierlichen Längsschweißung, unter Ausbildung eines zweiten Verbindungsstreifens verschweißt, insbesondere thermoplastisch verschweißt, ist, wobei dieser zweite Verbindungsstreifen näher beabstandet zum unteren Rand des Verstärkungsbereichs als zu dessen oberen Rand vorliegt, insbesondere am oder benachbart zum unteren Rand des Verstärkungsbereichs. Hierdurch wird ein nochmals verstärkter Öffnungsrand erhalten. Hierbei liegen der erste und der zweite Verbindungsstreifen mindestens abschnittsweise, vorzugsweise vollständig, im Wesentlichen überlappend vor.

Ein besonders hohes Maß an Stabilität und Reißfestigkeit wird bei den erfindungsgemäßen Kunststofftragetasche auch dadurch erreicht, dass die mittels Verschweißung erhaltenen ersten und zweiten Anbindungsbereiche der mit der Vorderwand und mit der Rückwand verbundenen Halteschlaufen beabstandet von dem ersten und/oder zweiten Verbindungstreifen vorliegen, insbesondere keine Überlappung mit dem ersten und/oder zweiten Verbindungsstreifen aufweisen.

Bei den erfindungsgemäßen Kunststofftragetasche ist bevorzugt vorgesehen, dass die Außenlage, der mehrlagige, insbesondere doppellagige, Kunststofffolienstreifen des Verstärkungsbereichs, insbesondere der Fortsetzungsabschnitt von Innen- und/oder Außenlage, und die mindestens eine innenliegende Lage, insbesondere die Innenlage, von Vorder- und/oder Rückwand sowie gegebenenfalls die mit der Vorderwand und/oder mit der Rückwand verbundenen Halteschlaufen, insbesondere deren erste und/oder zweite flexible Kunststoffmaterialstreifen und/oder der ein- oder mehrlagige, keinen Hohlkörper bildende Materialstreifen, aus Polyolefinen, insbesondere Polyethylen, gebildet sind oder bestehen. Alternativ zu Polyethylen kann auch auf Polypropylen zurückgegriffen werden. Ebenfalls kommen Copolymere mit Ethylen oder Propylen als Hauptkomponente in Betracht, wobei für die weiteren Comonomeren zum Beispiel auf Propylen bzw. Ethylen und/oder Buten, beispielsweise 1-Buten, oder Butadien zurückgegriffen werden kann.

Besonders bevorzugt wird unter den Polyethylenen auf LD-Polyethylen zurückgegriffen.

Vorzugsweise wird für sämtliche Komponenten der erfindungsgemäßen Kunststofftragetasche, zum Beispiel für die Innen- und Außenlage von Vorder- und Rückwand und für die Halteschlaufen von Vorder- und Rückwand sowie, sofern vorhanden, auch für die Seitenwände und die Bodenfläche, durchgängig ein einheitliches Kunststoffmaterial, beispielsweise Polypropylen oder Polyethylen, Polyethylen, und besonders bevorzugt auf LD-Polyethylen, zurückgegriffen. Hierdurch erhält man eine sortenreine Kunststofftragetasche, die sich als solche unproblematisch recyceln lässt.

Des Weiteren sind unter den erfindungsgemäßen Kunststofftragetaschen solche besonders geeignet, bei denen die mindestens eine innenliegende Lage, insbesondere die Innenlage, von Vorder- und/oder Rückwand eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt. Hierdurch kann eine textilartige Anmutung in der Handhabung, beispielsweise beim Zusammenfalten, der erfindungsgemäßen Kunststofftragetasche verstärkt werden. Auch kann entsprechender Weise der erste flexible, insbesondere schlauchförmige, Hohlkörper oder der ein- oder mehrlagige, keinen Hohlkörper bildende Materialstreifen eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfassen oder hieraus bestehen.

Ein besonders hohes Maß an Stabilität und Reißfestigkeit wird auch dadurch erreicht, dass man bei den vorangehend genannten Ausführungsformen für eine nicht geschäumte Kunststofffolie, vorzugsweise eine nicht geschäumte Polyolefinfolie, besonders bevorzugt eine nicht geschäumte Polyethylenfolie und insbesondere eine nicht geschäumte LD-Polyethylenfolie einsetzt. Die Kombination aus einer geschäumten Kunststoffinnenlage und eine nicht geschäumten Kunststoffaußenlage führt hier überraschenderweise zu besonders mechanisch belastbaren und dauerhaft stabilen Kunststofftragetaschen. Das gleiche trifft auf solche bevorzugten Ausgestaltungen der Halteschlaufe zu, bei denen der zweite flexible, insbesondere schlauchförmige, Hohlkörper, insbesondere der zweite flexible Kunststoffmaterialstreifen, auf einer nicht geschäumten Kunststofffolie, vorzugsweise einer nicht geschäumten Polyolefinfolie, besonders bevorzugt einer nicht geschäumten Polyethylenfolie und insbesondere eine nicht geschäumte LD-Polyethylenfolie, basiert oder hieraus gebildet ist.

Demgemäß kann in einer sehr zweckmäßigen Ausgestaltung vorgesehen sein, dass die Außenlage, der mehrlagige, insbesondere doppellagige, Kunststofffolienstreifen des Verstärkungsbereichs, insbesondere der Fortsetzungsabschnitt von Innen- oder Außenlage, und die mindestens eine innenliegende Lage, insbesondere die Innenlage, von Vorder- und Rückwand sowie gegebenenfalls die mit der Vorderwand und mit der Rückwand verbundenen Halteschlaufen, insbesondere deren erste und/oder zweite flexible Kunststoffmaterialstreifen oder deren ein- oder mehrlagiger, keinen Hohlkörper bildender Materialstreifen, aus Polyethylen, insbesondere LD-Polyethylen, gebildet sind oder bestehen, wobei die mindestens eine innenliegende Lage, insbesondere die Innenlage, von Vorder- und Rückwand eine geschäumte Polyethylenfolie, insbesondere eine geschäumte LD-Polyethylenfolie, darstellt, und wobei die Außenlage von Vorder- und/oder Rückwand, und gegebenenfalls der mehrlagige Kunststofffolienstreifen des Verstärkungsbereichs, eine nicht geschäumte Polyethylenfolie, insbesondere eine nicht geschäumte LD-Polyethylenfolie, darstellt. In diesem Zusammenhang sind solche Kunststofftragetaschen besonders bevorzugt, bei denen der erste flexible, insbesondere schlauchförmige, Hohlkörper oder der ein- oder mehrlagige, keinen Hohlkörper bildende Materialstreifen der Halteschlaufe von Vorder- und/oder Rückwand, insbesondere der erste flexible Kunststoffmaterialstreifen, aus geschäumtem Polymermaterial, vorzugsweise geschäumtem Polyethylen, und besonders bevorzugt geschäumtem LD-Polyethylen, gebildet ist oder besteht und wobei vorzugsweise der zweite flexible, insbesondere schlauchförmige, Hohlkörper der Halteschlaufe von Vorder- und/oder Rückwand, insbesondere der zweite flexible Kunststoffmaterialstreifen, aus nicht geschäumtem Polymermaterial, vorzugsweise nicht geschäumtem Polyethylen, und besonders bevorzugt nicht geschäumtem LD-Polyethylen, gebildet ist oder besteht.

Im Sinne der vorliegenden Erfindung liegen die die Außenlage, der mehrlagige, insbesondere doppellagige, Kunststofffolienstreifen des Verstärkungsbereichs, insbesondere der Fortsetzungsabschnitt von Innen- oder Außenlage, und/oder die mindestens eine innenliegende Lage, insbesondere die Innenlage, von Vorder- und/oder Rückwand zweckmäßigerweise in Folienform vor.

Die erfindungsgemäßen Kunststofftragetasche, insbesondere die sortenreine erfindungsgemäßen Kunststofftragetasche, kann dabei der ausgestaltet sein, dass die Außenlage, der mehrlagige, insbesondere doppellagige, Kunststofffolienstreifen des Verstärkungsbereichs, insbesondere der Fortsetzungsabschnitt von Innen- oder Außenlage, und/oder die mindestens eine innenliegende Lage, insbesondere die Innenlage, von Vorder- und/oder Rückwand sowie gegebenenfalls die mit der Vorderwand und/oder mit der Rückwand verbundenen Halteschlaufen, insbesondere deren erste und/oder zweite flexible Kunststoffmaterialstreifen oder der ein- oder mehrlagige, keinen Hohlkörper bildende Materialstreifen, recyceltes Kunststoffmaterial enthalten oder hieraus bestehen, insbesondere recycelte Polyolefine, beispielsweise Polyethylen.

Mit der erfindungsgemäßen Tragetasche kann eine Halteschlaufe für eine Kunststofftragetasche eingesetzt werden, enthaltend einen ersten flexiblen, insbesondere schlauchförmigen, Hohlkörper und/oder einen ein- oder mehrlagigen, keinen Hohlkörper bildenden Materialstreifen, insbesondere Kunststoffmaterialstreifen, und einen zweiten flexiblen, insbesondere schlauchförmigen, Hohlkörper, der zumindest abschnittsweise, insbesondere vollständig, den ersten flexiblen Hohlkörper umhüllt. Hierbei sind solche Halteschlaufe bevorzugt, bei denen der erste flexible, insbesondere schlauchförmige, Hohlkörper oder der ein- oder mehrlagige, keinen Hohlkörper bildende Materialstreifen und der diesen ersten flexiblen Hohlkörper oder diesen ein- oder mehrlagigen Materialstreifen umhüllende zweite flexible, insbesondere schlauchförmige, Hohlkörper zumindest abschnittsweise, insbesondere entlang einer, vorzugsweise kontinuierlichen, Streifenbahn, miteinander verbunden, insbesondere verschweißt, sind.

Hierbei kann gemäß einer bevorzugten Ausführungsform der Halteschlaufe vorgesehen sein, dass der erste flexible, insbesondere schlauchförmigen, Hohlkörper aus einem ersten flexiblen Kunststoffmaterialstreifen mit gegenüberliegenden ersten und zweiten Längsseitenrändern gebildet ist, dessen gegenüberliegende erste und zweite Längsseitenränder in einem Überlappungsbereich miteinander verschweißt, insbesondere thermoplastisch verschweißt, sind und/oder dass der zweite flexible, insbesondere schlauchförmige, Hohlkörper aus einem zweiten flexiblen Kunststoffmaterialstreifen mit gegenüberliegenden ersten und zweiten Längsseitenrändern gebildet ist, dessen gegenüberliegende erste und zweite Längsseitenränder in einem zweiten Überlappungsbereich miteinander verschweißt, insbesondere thermoplastisch verschweißt, sind.

In einer zweckmäßigen Ausführungsform zeichnet sich die hier geschilderte Halteschlaufe auch dadurch aus, dass der erste Kunststoffmaterialstreifen des ersten flexiblen Hohlkörpers und der zweite Kunststoffmaterialstreifen des zweiten flexiblen Hohlkörpers zumindest abschnittsweise, insbesondere entlang der ersten und zweiten Überlappungsbereiche, miteinander verschweißt, insbesondere thermoplastisch verschweißt, sind.

Außerdem sind solche Halteschlaufen bevorzugt, bei denen der erste flexible Hohlkörper aus einem ersten flexiblen Kunststoffmaterialstreifen mit gegenüberliegenden ersten und zweiten Längsseitenrändern gebildet ist und dass der zweite flexible Hohlkörper aus einem zweiten flexiblen Kunststoffmaterialstreifen mit gegenüberliegenden ersten und zweiten Längsseitenrändern gebildet ist, wobei in dem Überlappungsbereich von erstem und zweitem Längsseitenrand des ersten flexiblen Kunststoffmaterialstreifens der erste Längsseitenrand des ersten Kunststoffmaterialstreifens mit dem ersten Längsseitenrand des zweiten Materialstreifens und dieser erste Längsseitenrand des zweiten Kunststoffmaterialstreifens mit dem zweiten Längsseitenrand des ersten Kunststoffmaterialstreifens verschweißt, insbesondere thermoplastisch verschweißt, sind und wobei in dem Überlappungsbereich von erstem und zweitem Längsseitenrand des zweiten flexiblen Kunststoffmaterialstreifens der zweite Längsseitenrand des ersten Kunststoffmaterialstreifens mit dem zweiten Längsseitenrand des zweiten Materialstreifens und dieser zweite Längsseitenrand des ersten Kunststoffmaterialstreifens mit dem ersten Längsseitenrand des zweiten Kunststoffmaterialstreifens verschweißt, insbesondere thermoplastisch verschweißt, sind.

Als besonders pragmatisch sowohl bei der Herstellung von Kunststofftragetaschen wie auch bei der Fertigung und Lagerung haben sich solche Halteschlaufen erwiesen, bei denen diese unter Ausbildung von zwei gegenüberliegenden Längsfaltkanten flächig gepresst vorliegen, wobei die Überlappungsbereiche der gegenüberliegenden ersten und zweiten Längsseitenränder von erstem und zweitem flexiblen Kunststoffmaterialstreifen der ersten und zweiten flexiblen Hohlkörper zwischen den sich gegenüberliegenden Längsfaltkanten sowie insbesondere auf derselben Seite vorliegen.

Die hier geschilderten Halteschlaufen eignen sich überraschenderweise auch für die Herstellung farbiger bzw. mit Information versehener Halteschlaufen, die auch bei mehrfacher Verwendung, beispielsweise durch Abrieb, keine Beeinträchtigungen erfahren. Hierbei kann vorgesehen sein, dass der den zweiten flexiblen Hohlkörper der Halteschlaufe bildende oder enthaltende zweite flexible Kunststoffmaterialstreifen auf einem mindestens abschnittweise transparenten Kunststoffmaterial, insbesondere Polyethylen, basiert, das mindestens abschnittsweise innenseitig, insbesondere mittels Konterdruckverfahren, bedruckter oder bedruckt ist.

Ein besonders hohes Maß an Stabilität und Tragekomfort sowie eine textilartige Anmutung wird bei den hier geschilderten Halteschlaufe auch dadurch erhalten, dass die ersten und/oder zweiten flexiblen Kunststoffmaterialstreifen mindestens abschnittsweise, insbesondere vollflächig, ein Prägemuster aufweisen.

Solche hier geschilderten Halteschlaufen sind besonders bevorzugte, bei denen der erste flexible, insbesondere schlauchförmige, Hohlkörper, insbesondere der erste flexible Kunststoffmaterialstreifen, und/oder der ein- oder mehrlagige, keinen Hohlkörper bildende Materialstreifen und/oder der zweite flexible, insbesondere schlauchförmige, Hohlkörper, insbesondere der zweite flexible Kunststoffmaterialstreifen, aus Polyolefinen, insbesondere Polyethylen, gebildet sind oder bestehen. Hierbei wird bevorzugt auf LD-Polyethylen zurückgegriffen.

Hinsichtlich Dauerbelastbarkeit und mechanischer Beanspruchbarkeit sind überraschenderweise solche hier geschilderten Halteschlaufen besonders bevorzugt, bei denen der erste flexible, insbesondere schlauchförmige, Hohlkörper, insbesondere der erste flexible Kunststoffmaterialstreifen, und/oder der ein- oder mehrlagige, keinen Hohlkörper bildende Materialstreifen, auf einer geschäumten Kunststofffolie, vorzugsweise einer geschäumten Polyolefinfolie, besonders bevorzugt einer geschäumten Polyethylenf olie und insbesondere einer geschäumten LD-Polyethylenfolie, basieren oder hieraus gebildet sind, wobei vorzugsweise der zweite flexible, insbesondere schlauchförmige, Hohlkörper, insbesondere der zweite flexible Kunststoffmaterialstreifen, auf einer nicht geschäumten Kunststofffolie, vorzugsweise einer nicht geschäumten Polyolefinfolie, besonders bevorzugt einer nicht geschäumten Polyethylenfolie und insbesondere einer nicht geschäumten LD-Polyethylenfolie, basiert oder hieraus gebildet ist.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:
- Figur 1: eine schematische Querschnittsansicht eines Ausschnitts einer Ausführungsform der erfindungsgemäßen Kunststofftragetasche;
- Figur 2: eine schematische Seitenansicht einer erfindungsgemäßen Kunststofftragetasche;
- Figur 3: eine schematische Querschnittsansicht eines Ausschnitts einer weiteren Ausführungsform einer erfindungsgemäßen Kunststofftragetasche;
- Figur 4: eine schematische Querschnittsansicht eines Ausschnitts einer weiteren Ausführungsform einer erfindungsgemäßen Kunststofftragetasche;
- Figur 5: eine schematische laterale Querschnittsansicht einer ersten Ausführungsform einer Halteschlaufe für eine Kunststofftragetasche;
- Figur 6: eine schematische laterale Querschnittsansicht einer zweiten Ausführungsform einer Halteschlaufe für eine Kunststofftragetasche;
- Figur 7: eine schematische laterale Querschnittsansicht einer dritten Ausführungsform einer Halteschlaufe für eine Kunststofftragetasche und
- Figur 8: eine schematische laterale Querschnittsansicht einer vierten Ausführungsform einer Halteschlaufe für eine Kunststofftragetasche.

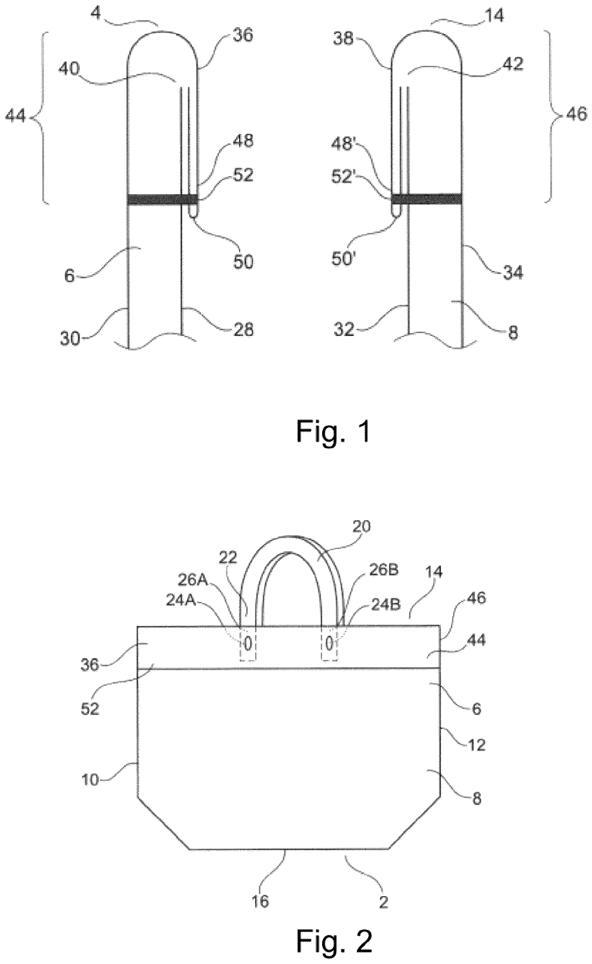

Figur 1 zeigt eine schematische Querschnittsansicht von Teilen einer erfindungsgemäßen Kunststofftragetasche 1. Diese umfasst, wie exemplarisch auch Figur 2 entnommen werden kann, ein Bodenende 2 und ein gegenüberliegendes Öffnungsende 4 mit einer Vorderwand 6 und einer Rückwand 8. Vorder- und Rückwand verfügen über einen Öffnungsrand 14 sowie über einen Bodenrand 16, welche im flächig ausgebreiteten Zustand regelmäßig die maximale Ausdehnung des Korpus der Kunststofftragetasche wiedergeben. Bei der dargestellten Ausführungsform des Ausschnitts einer erfindungsgemäßen Kunststofftragetasche 1 sind aus Gründen der leichteren Veranschaulichung die Trageschlaufen nicht mit abgebildet worden. Bei der dargestellten Ausführungsform liegen die Vorderwand 6 und die Rückwand 8 jeweils doppellagig vor, gebildet aus einer Innenlage 28 bzw. 32 und einer Außenlage 30 bzw. 34. Die Außenlage 30 der Vorderwand 6 geht am oberen Ende in einen Fortsetzungsabschnitt 36 über. Dieser ist um den oberen Rand 40 der Innenlage 28 auf deren Innenseite herumgeführt. In der in Figur 1 dargestellten Ausführungsform wird die doppellagige Ausgestaltung des Fortsetzungsabschnitts 36 durch ein zur Innenwand bzw. Innenlage 28 gerichtetes Umschlagen der Folienbahn erreicht, so dass der innenliegende Abschnitt des Fortsetzungsabschnitts 36 in Richtung des oberen Randes 40 der Innenlage 28 geführt wird. Der doppellagig ausgestaltete Fortsetzungsabschnitt 36 wird in der in Figur 1 dargestellten Ausführungsform im unteren Bereich 48, vorzugsweise beabstandet von dem Umkehrpunkt 50 mit der Innenlage 28 in einem Verbindungsbereich 52 verschweißt. Hierbei umfasst die Verschweißung 52 nicht nur den doppellagig ausgestalteten Fortsetzungsabschnitt 36 und die Innenlage 28, sondern erfasst ebenfalls die Anbindung der Außenlage 30 mit. Es liegt somit im Bereich des Öffnungsendes 4 ein Verstärkungsbereich 44 vor, der zu einer sehr stabilen, mechanisch stark belastbaren und wiederverwendbaren Kunststofftragetasche führt. Die Doppellagigkeit von Vorder- und Rückwand 6 bzw. 8 erstreckt sich auch bis in den Bodenbereich. Demgemäß können in der in Figur 1 dargestellten Ausführungsform einer erfindungsgemäßen Kunststofftragetasche 1 der Fortsetzungsabschnitt 36 der Außenlage 30 der Vorderwand 6, diese Außenlage der Vorderwand sowie die Außenlage 34 Rückwand und der sich daran am oberen Ende anschließende Fortsetzungsabschnitt 38, einschließlich der den Bodenbereich bildende Abschnitt als einstückige Kunststofffolie ausgebildet sein. In gleicher Weise sind bei den in der Figur 1 dargestellten Ausführungsformen die Innenlage 28 der Vorderwand 6 und die Innenlage 32 der Rückwand 8, einschließlich der den Bodenbereich bildenden Passage, als einstückige Folienbahn ausgebildet. Die Kunststofftragetasche 1 gemäß Figur 1 ist mechanisch stark belastbar und erlaubt den wiederholten Einsatz und das Tragen großer Lasten, ohne etwaige Beeinträchtigungen in Kauf nehmen zu müssen.

Figur 2 zeigt eine erfindungsgemäße Kunststofftragetasche 1 in schematischer Seitenansicht. Der Taschenkorpus umfasst ein Bodenende 2 und ein gegenüberliegendes Öffnungsende 4 mit einer Vorderwand 6 und einer Rückwand 8. Vorder- und Rückwand verfügen über einen Öffnungsrand 14 sowie über einen Bodenrand 16, welche im flächig ausgebreiteten Zustand regelmäßig die maximale Ausdehnung des Korpus der Kunststofftragetasche wiedergeben. Die Halteschlaufen 20 und 22 von Vorder- und Rückwand 6 bzw. 8 sind innenseitig in den Verstärkungsbereichen 44, 46 von Vorder- bzw. Rückwand 6 8 angebracht. Demgemäß sind die jeweiligen Anbindungsbereiche 24A, 24B und 26A, 26B in der dargestellten Version gestrichelt gezeichnet. Auf diese Weise kann die erfindungsgemäße Tragetasche besonders unproblematisch befüllt werden. Auch ist bei der dargestellten Ausführungsform einer erfindungsgemäßen Kunststofftragetaschen 1 von besonderem Vorteil, dass die genannten Anbindungsbereiche der Halteschlaufen nicht mit der Verbindungsschweißnaht 52, mit der der Kunststofffolienstreifen bzw. Fortsetzungsabschnitt 36 mit der Vorder- bzw. Rückwand verschweißt ist, überlappen.

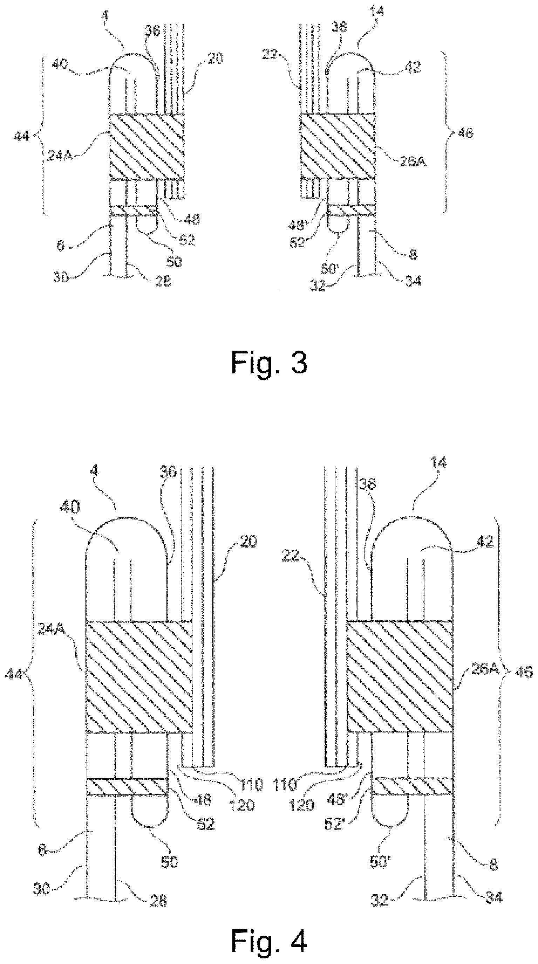

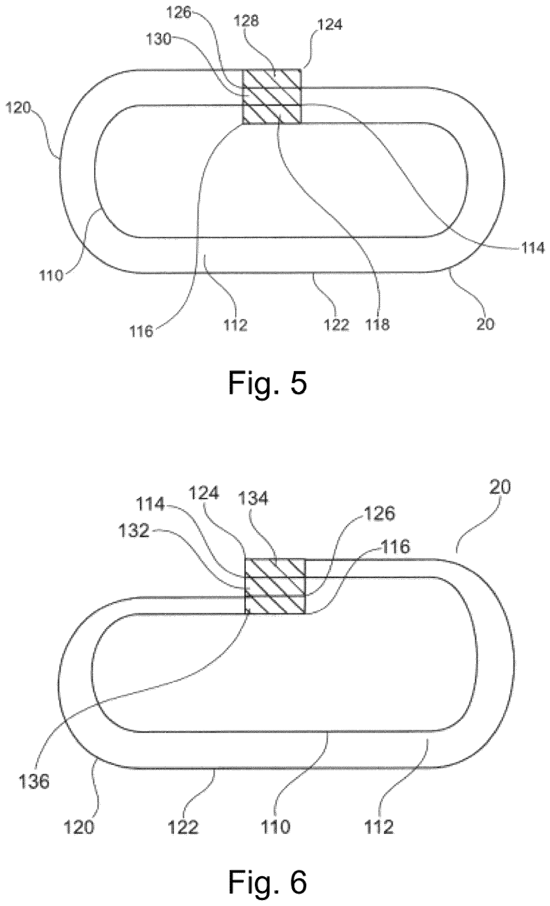

In der in Figur 3 dargestellten Ausführungsform liegt der Fortsetzungsabschnitt 36 mit seinem umgeschlagenen Endabschnitt 60 miteinander verschweißt sowie ebenfalls mit der Innenseite der Innenlage 28 mittels Verschweißung verbunden vor. Auch ist die Innenlage an dieser Verbindungsstelle 52 mit der Außenlage 30 mittels Verschweißung verbunden. Die in Figur 3 ebenfalls ausschnittsweise dargestellte Halteschlaufe 20 ist in dem dargestellten ersten Anbindungsbereich 24A innenseitig mit dem umgeschlagenen doppellagigen Fortsetzungsabschnitt 36 verschweißt. Die Halteschlaufe 20 kann hierbei, wie in Figur 3 angedeutet, aus einem ersten flexiblen schlauchförmigen Hohlkörper und einem zweiten flexiblen schlauchförmigen Hohlkörper, der den ersten Hohlkörper umhüllt, gebildet sein. Damit liegt ein erstes schlauchförmiges Gebilde innerhalb eines zweiten schlauchförmigen Gebildes vor. Die ersten und zweiten flexiblen schlauchförmigen Hohlkörper basieren dabei vorzugsweise auf ersten und zweiten flexiblen Kunststoffmaterialstreifen, wobei der erste flexible Kunststoffmaterialstreifen gegenüberliegende erste und zweite Längsseitenränder und umfasst, die in der schlauchförmigen Ausbildung des Hohlkörpers einen Überlappungsbereich ausbilden. In gleicher Weise kann der zweite flexible schlauchförmige Hohlkörper auf einem flexiblen Materialstreifen basieren, der einander gegenüberliegende erste und zweite Längsseitenränder und aufweist, die in der schlauchförmigen Ausgestaltung einen Überlappungsbereich ausbilden. Weitere Details zu diesen Halteschlaufen finden sich nachfolgend im Zusammenhang mit den Figuren 5 bis 8 beschrieben. Ferner liegen in diesem Anbindungsbereich 24A die Außenlage, die Innenlage und der umgeschlagene Fortsetzungsabschnitt 36 jeweils miteinander verschweißt vor. Auf diese Weise wird eine sehr stabile, mechanisch stark belastbare Kunststofftragetasche erhalten. Außerdem kann durch die dargestellte innenseitige Anbringung der Halteschlaufen ein komplikationsloses Befüllen der erfindungsgemäßen Kunststofftragetaschen sichergestellt werden. Die oberen Enden bzw. Öffnungsränder werden mithilfe der Trageschlaufen daran gehindert, als Stoßkanten beim Befüllen mit Stückgut zu dienen.

Die Ausführungsform gemäß Figur 4 unterscheidet sich von derjenigen gemäß Figur 3 dadurch, dass nur die Außenseite des Fortsetzungsabschnitts 36, 38 mit der Außenseite des zweiten Hohlkörpers 120 der Halteschlaufe 20, 22 im Anbindungsbereich 24A bzw. 26A verbunden, insbesondere thermoplastisch verschweißt, und wobei darüber hinaus die Innenseite des zweiten Hohlkörpers 120 mit der Außenseite des innenliegenden Hohlkörpers 110 verbunden, insbesondere thermoplastisch verschweißt, vorliegen. Hingegen sind bei dieser Ausführungsform in den Anbindungsbereichen der Halteschlaufen die gegeneinander anliegenden Innenseiten des innenliegenden flexiblen ersten Hohlkörpers 110 nicht miteinander verbunden, insbesondere nicht miteinander thermoplastisch verschweißt, und auch die in Richtung des Tascheninneren, d.h. zur gegenüberliegenden Taschenwand weisende Außenseite des innenliegenden flexiblen ersten Hohlkörpers 110 mit dem hierzu benachbart vorliegenden Abschnitt der Innenseite des außenliegenden flexiblen zweiten Hohlkörpers 120 liegen nicht miteinander verbunden, insbesondere nicht miteinander thermoplastisch verschweißt, vor. Es hat sich überraschend gezeigt, dass auch bei dieser Art der Anbindung der Halteschlaufe an die Kunststofftragetasche im Bereich des Verstärkungsbereichs bereits eine sehr stabile, dauerhaft belastbare, zuverlässig wiederverwendbare Kunststofftragetasche resultiert.

Figur 5 zeigt den Querschnitt durch eine Halteschlaufe 20 für eine Kunststofftragetasche enthaltend einen ersten flexiblen schlauchförmigen Hohlkörper 110 und einen zweiten flexiblen schlauchförmigen Hohlkörper 120, der den ersten Hohlkörper 110 umhüllt. Damit liegt ein erstes schlauchförmiges Gebilde innerhalb eines zweiten schlauchförmigen Gebildes vor. Die ersten und zweiten flexiblen schlauchförmigen Hohlkörper 110, 120 basieren auf ersten und zweiten flexiblen Kunststoffmaterialstreifen 112 und 122, wobei der erste flexible Kunststoffmaterialstreifen 112 gegenüberliegende erste und zweite Längsseitenränder 114 und 116 umfasst, die in der schlauchförmigen Ausbildung des Hohlkörpers 110 einen Überlappungsbereich 118 ausbilden. In gleicher Weise basiert der zweite flexible schlauchförmige Hohlkörper 120 auf einem flexiblen Materialstreifen 122, der einander gegenüberliegende erste und zweite Längsseitenränder 124 und 126 aufweist, die in der schlauchförmigen Ausgestaltung einen Überlappungsbereich 128 ausbilden. Die in Figur 5 dargestellte Ausführungsform einer Halteschlaufe 20 ist derart ausgestaltet, dass die ersten und zweiten Längsseitenränder von erster und zweiter Kunststoffmaterialbahn 112, 122 in den Überlappungsbereichen 118 und 128 jeweils miteinander verschweißt sind. Darüber hinaus bilden die Überlappungsbereiche 118 und 128 ebenfalls einen Überlappungsbereich 130 aus. In diesem liegen die Innenseite des zweiten Längsseitenrandes 126 des äußeren schlauchförmigen Hohlkörpers 120 bzw. des Kunststoffmaterialstreifens 122 und die Außenseite des ersten Längsseitenrandes 114 des innenliegenden schlauchförmigen Hohlkörpers 110 bzw. des ersten flexiblen Kunststoffmaterialstreifens 112 aneinander an bzw. sind einander zugewandt und in der dargestellten Ausführungsform miteinander verbunden, insbesondere verschweißt. Auf diese Weise wird eine sehr stabile und mechanisch belastbare Halteschlaufe für eine Kunststofftragetasche erhalten. Die flexiblen Kunststoffmaterialstreifen 112 und 122 sind dabei vorzugsweise aus demselben Kunststoffmaterial, insbesondere Polyethylen und besonders bevorzugt LD-Polyethylen gefertigt.

Figur 6 zeigt eine weitere Ausführungsform einer Halteschlaufe 20. Diese unterscheidet sich von der Ausführungsform gemäß Figur 5 durch die Ausbildung der jeweiligen Überlappungsbereiche, in denen die flexiblen ersten und zweiten Kunststoffmaterialstreifen 112 und 122 miteinander verbunden, insbesondere verschweißt vorliegen. So liegen in der dargestellten Ausführungsform der erste Längsseitenrand 114 des ersten flexiblen Kunststoffmaterialstreifens 112 und der zweite Längsseitenrand 126 des zweiten flexiblen Kunststoffmaterialstreifens 122 in einem Überlappungsbereich 132 aneinander an bzw. sind einander zugewandt und sind in diesem Bereich miteinander verbunden, insbesondere verschweißt. Ferner liegt innenseitig zu dem zweiten Längsseitenrand 126 der erste Längsseitenrand 116 des ersten flexiblen Kunststoffmaterialstreifens 112 vor, welche in einem Überlappungsbereich 136 miteinander verbunden, insbesondere verschweißt sind. Dieser Überlappungsbereich 136 ist vorzugsweise im Wesentlichen deckungsgleich mit dem vorangehend geschilderten Überlappungsbereich 132. Entsprechend ist die Außenseite des ersten Längsseitenrandes 114 des ersten Kunststoffmaterialstreifens 112 der Innenseite des ersten Längsseitenrandes 124 des zweiten flexiblen Kunststoffmaterialstreifens 122 zugewandt und in einem Überlappungsbereich 134 miteinander verbunden, insbesondere verschweißt. Vorzugsweise befindet sich der Überlappungsbereich 134 im Wesentlichen in Deckung mit den Überlappungsbereichen 132 und 136.

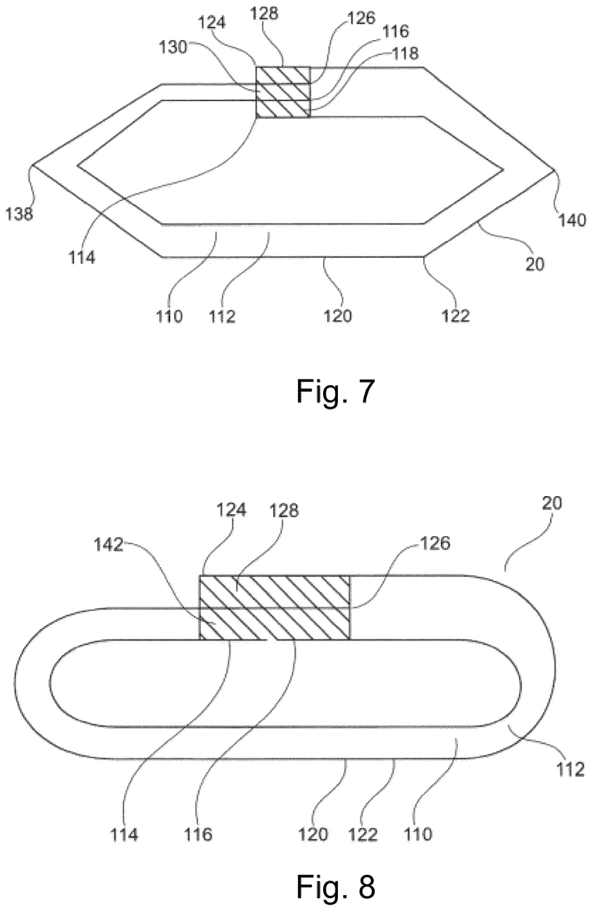

Figur 7 zeigt eine weitere Ausgestaltung einer Halteschlaufe 20. Diese Ausführungsform unterscheidet sich von der Halteschlaufe gemäß Figur 5 im Wesentlichen dadurch, dass nicht der erste Längsseitenrand des ersten flexiblen Kunststoffmaterialstreifens 112, sondern der zweite Längsseitenrand 116 an den zweiten Längsseitenrand 126 des zweiten Kunststoffmaterialstreifens 122 im Überlappungsbereich 130 anliegt bzw. diesem zugewandt ist. Demgemäß sind die ersten Längsseitenränder 114 und 124 in der Ausführungsform gemäß Figur 7 weiter voneinander beabstandet als in der Ausführungsform gemäß Figur 5. Ferner ist die Halteschlaufe 100 gemäß Figur 7 flächig gepresst worden, so dass zwei sich gegenüberliegende Längsfaltkanten 138 und 140 vorliegen.

Die flexiblen Kunststoffmaterialstreifen, insbesondere der des zweiten schlauchförmigen Hohlkörpers, das heißt der den außenliegenden Hohlkörper bildende Kunststoffmaterialstreifen kann in einer zweckmäßigen Ausgestaltung mit einem Prägemuster versehen sein (nicht abgebildet). Hierdurch entstehen ein größerer Tragekomfort und eine Haptik, die der einer Textilhalteschlaufe entspricht bzw. nahekommt.

Figur 8 entnimmt man eine weitere Ausführungsform einer Halteschlaufe 20 hierbei bilden die ersten und zweiten Längsseitenränder 124, 126 des zweiten Kunststoffmaterialstreifens 122 einen Überlappungsbereich 128 aus, in dem sie miteinander verbunden, insbesondere verschweißt, sind. In diesem Überlappungsbereich liegen an der Innenseite des zweiten Längsseitenrandes 126 die ersten und zweiten Längsseitenränder 114, 116 des ersten flexiblen Kunststoffmaterialstreifens 112 an. Diese sind im Unterschied zu den vorangehend dargestellten Ausführungsformen einer Halteschlaufe nicht überlappend angeordnet und können in einer bevorzugten Ausführungsform aneinander anstoßen. In dem Überlappungsbereich 142 sind diese ersten und zweiten Längsseitenränder 114, 116 mit dem zweiten Längsseitenrand 126 der den zweiten Hohlkörper 120 bildenden Kunststoffmaterialstreifen 122 verbunden, insbesondere verschweißt. Selbstverständlich ist es ebenfalls möglich, dass nur der zweite Längsseitenrand 116 des ersten Kunststoffmaterialstreifens 112 in dem Überlappungsbereich 142 vorliegt und mit dem zweiten Längsseitenrand 126 verbunden, verschweißt ist, während der erste Längsseitenrand 114 des ersten Kunststoffmaterialstreifens 112 benachbart hierzu, d.h. ohne Überlappung mit dem ersten Längsseitenrand 124 des zweiten Kunststoffmaterialstreifens 122 mit der Innenseite des zweiten Kunststoffmaterialstreifens 122 verbunden, insbesondere verschweißt, vorliegt (nicht abgebildet).

Die vorangehend geschilderten Ausführungsformen einer Halteschlaufe eignen sich insbesondere auch für die Zurverfügungstellung bedruckter Halteschlaufen. So kann durch Bedrucken der Innenseite des zweiten Kunststoffmaterialstreifens, welcher den außenliegenden schlauchförmigen Hohlkörper bildet, eine mit Motiven, Informationen oder in sonstiger Weise farbig ausgestalteter Halteschlaufe erhalten werden, die gegenüber mechanischer Beanspruchung sehr widerstandsfähig ist. Hierfür greift man bevorzugt auf transparente zweite Kunststoffmaterialstreifen zurück, welche innenseitig bedruckt werden, vorzugweise mittels Konterdruckverfahrens.

## Patentansprüche

1. Kunststofftragetasche (1) mit einem geschlossenen oder im Wesentlichen geschlossenen Bodenende (2) und einem gegenüberliegenden Öffnungsende (4), umfassend eine Vorderwand (6) und eine Rückwand (8), jeweils mit einem ersten Seitenrand (10) und einem gegenüberliegenden zweiten Seitenrand (12) sowie einem Öffnungsrand (14) und einem Bodenrand (16), wobei die Vorderwand (6) und die Rückwand (8) im Bereich ihrer ersten und zweiten Seitenränder (10, 12) und ihrer Bodenränder (16) mindestens abschnittsweise direkt oder über Seitenwände und/oder Seitenfalten und/oder eine Bodenfalte (18) miteinander verbunden sind, sowie mindestens eine mit der Vorderwand (6) und/oder mindestens eine mit der Rückwand (8) verbundene Halteschlaufe (20, 22) mit jeweils einem ersten und einem zweiten Anbindungsbereich (24A, 24B; 26A, 26B),
wobei die Vorder- und Rückwand (6, 8) mehrlagig ausgestaltet ist, umfassend mindestens eine innenliegende Lage und eine Außenlage (28, 30; 32, 34),
wobei die Vorder- und Rückwand (6, 8) im Bereich des Öffnungsendes (4) einen sich bis zum Öffnungsende erstreckenden oder dieses umfassenden Verstärkungsbereich (44, 46) aufweist, enthaltend mindestens einen innenseitig an der Vorderwand (6) befestigten und mindestens einen innenseitig an der Rückwand (8) befestigten und sich von oder beabstandet von dem ersten Seitenrand (10) in Richtung des oder bis zum zweiten Seitenrand (12) erstreckenden mehrlagigen Kunststofffolienstreifen, wobei sich an die Außenlage (30, 34) ein Fortsetzungsabschnitt (36, 38) anschließt, wobei die Außenlage (30, 34) und der Fortsetzungsabschnitt (36, 38) der Vorderwand (6) und der Rückwand (8) einstückig ausgebildet sind, wobei der Fortsetzungsabschnitt den Kunststofffolienstreifen des Verstärkungsbereichs darstellt,
wobei der Fortsetzungsabschnitt (36, 38) sich mindestens abschnittsweise entlang der Innenseite der mindestens einen innenliegenden Lage (28, 32) erstreckt und an dieser anliegt,
wobei der an der Innenseite der mindestens einen innenliegenden Lage (28, 32) vorliegende Fortsetzungsabschnitt (36, 38) mittels Umschlagens zumindest bereichsweise mindestens doppellagig ausgestaltet ist,
wobei dieser Fortsetzungsabschnitt (36, 38) entlang einer Erstreckung von oder beabstandet von dem ersten Seitenrand (10) in Richtung des oder bis zum zweiten Seitenrand (12) mit der Innenseite der mindestens einen innenliegenden Lage (28, 32) verschweißt ist,
wobei die ersten und zweiten Anbindungsbereiche der mit der Vorderwand (6) verbundenen Halteschlaufe und die ersten und zweiten Anbindungsbereiche der mit der Rückwand (8) verbundenen Halteschlaufe an der Innenseite von Vorder- bzw. Rückwand (8) im Bereich des mehrlagigen Kunststofffolienstreifens des Verstärkungsbereichs vorliegen,
wobei der mehrlagige Kunststofffolienstreifen des Verstärkungsbereichs von Vorder- und Rückwand (6, 8) über seine sämtlichen Lagen mit der Innenseite der mindestens einen innenliegenden Lage entlang der Erstreckung von oder beabstandet von dem ersten Seitenrand in Richtung des oder bis zum zweiten Seitenrand unter Ausbildung eines ersten Verbindungsstreifens verschweißt ist, wobei die Außenlage von Vorder- und Rückwand (6, 8) mit der Außenseite der mindestens einen innenliegenden Lage entlang der Erstreckung von oder beabstandet von dem ersten Seitenrand in Richtung des oder bis zum zweiten Seitenrand unter Ausbildung eines zweiten Verbindungsstreifens verschweißt ist, wobei die ersten und zweiten Anbindungsbereiche der mit der Vorderwand (6) und mit der Rückwand (8) verbundenen Halteschlaufen beabstandet von dem ersten oder zweiten Verbindungstreifen vorliegen,
wobei der erste und der zweite Verbindungsstreifen mindestens abschnittsweise im Wesentlichen überlappend vorliegen,
wobei die mit der Vorderwand (6) und die mit der Rückwand (8) verbundene Halteschlaufe jeweils in ihren ersten und zweiten Anbindungsbereichen mit dem mehrlagigen Kunststofffolienstreifen des Verstärkungsbereichs und auch mit der mindestens einen innenliegenden Lage und der Außenlage verschweißt ist, wobei der erste Verbindungsstreifen näher beabstandet zum unteren Rand des Verstärkungsbereichs als zu dessen oberen Rand vorliegt und
wobei der zweite Verbindungsstreifen näher beabstandet zum unteren Rand des Verstärkungsbereichs als zu dessen oberen Rand vorliegt.

2. Kunststofftragetasche (1) nach Anspruch 1, **dadurch gekennzeichnet, dass** die mit der Vorderwand (6) über ihre ersten und zweiten Anbindungsbereiche (24A, 24B) verbundene Halteschlaufe (20) und/oder die mit der Rückwand (8) über ihre ersten und zweiten Anbindungsbereich (26A, 26B) verbundene Halteschlaufe (22) im Bereich vom jeweiligen ersten bis zum zweiten Anbindungsbereich zumindest abschnittsweise einen ersten flexiblen Hohlkörper und/oder einen ein- oder mehrlagigen, keinen Hohlkörper bildenden Materialstreifen, insbesondere Kunststoffmaterialstreifen, aufweist, der zumindest abschnittsweise oder im Wesentlichen vollständig von einem zweiten flexiblen Hohlkörper umhüllt ist.

3. Kunststofftragetasche (1) nach Anspruch 1 oder 2, **dadurch gekennzeichnet, dass**
der mehrlagige Kunststofffolienstreifen des Verstärkungsbereichs der Vorderwand mit der Innenlage von oder beabstandet von dem ersten Seitenrand in Richtung des oder bis zum zweiten Seitenrand mittels thermoplastischer Verschweißung befestigt ist und/oder dass
der mehrlagige Kunststofffolienstreifen des Verstärkungsbereichs der Rückwand mit der Innen-lage von oder beabstandet von dem ersten Seitenrand in Richtung des oder bis zum zweiten Seitenrand mittels thermoplastischer Verschweißung befestigt ist.

4. Kunststofftragetasche (1) nach Anspruch 2 oder 3, sofern und soweit auf den Anspruch 2 rückbezogen, **dadurch gekennzeichnet, dass**
der erste flexible Hohlkörper aus einem ersten flexiblen Kunststoffmaterialstreifen mit gegenüberliegenden ersten und zweiten Längsseitenrändern gebildet ist, dessen gegenüberliegende erste und zweite Längsseitenränder in einem Überlappungsbereich miteinander verschweißt sind und/oder dass der zweite flexible Hohlkörper aus einem zweiten flexiblen Kunststoffmaterialstreifen mit gegenüberliegenden ersten und zweiten Längsseitenrändern gebildet ist, dessen gegenüberliegende erste und zweite Längsseitenränder in einem zweiten Überlappungsbereich miteinander verschweißt sind.

5. Kunststofftragetasche (1) nach Anspruch 2 oder Anspruch 3, sofern und soweit auf den Anspruch 2 rückbezogen, oder Anspruch 4, sofern und soweit direkt oder indirekt auf den Anspruch 3 rückbezogen, **dadurch gekennzeichnet, dass** der erste flexible Hohlkörper aus einem ersten flexiblen Kunststoffmaterialstreifen mit gegenüberliegenden ersten und zweiten Längsseitenrändern gebildet ist und dass der zweite flexible Hohlkörper aus einem zweiten flexiblen Kunststoffmaterialstreifen mit gegenüberliegenden ersten und zweiten Längsseitenrändern gebildet ist,
wobei in dem Überlappungsbereich von erstem und zweitem Längsseitenrand des ersten flexiblen Kunststoffmaterialstreifens der erste Längsseitenrand des ersten Kunststoffmaterialstreifens mit dem ersten Längsseitenrand des zweiten Materialstreifens und dieser erste Längsseitenrand des zweiten Kunststoffmaterialstreifens mit dem zweiten Längsseitenrand des ersten Kunststoffmaterialstreifens verschweißt sind und
wobei in dem Überlappungsbereich von erstem und zweitem Längsseitenrand des zweiten flexiblen Kunststoffmaterialstreifens der zweite Längsseitenrand des ersten Kunststoffmaterialstreifens mit dem zweiten Längsseitenrand des zweiten Materialstreifens und dieser zweite Längsseitenrand des ersten Kunststoffmaterialstreifens mit dem ersten Längsseitenrand des zweiten Kunststoffmaterialstreifens verschweißt sind.

6. Kunststofftragetasche (1) nach Anspruch 2 oder nach einem der Ansprüche 3 bis 5, sofern und soweit direkt oder indirekt auf den Anspruch 2 rückbezogen, **dadurch gekennzeichnet, dass**
der zweite flexible Hohlkörper der Halteschlaufe von Vorder- und/oder Rückwand (6, 8), insbesondere der den zweiten flexiblen, insbesondere schlauchförmigen, Hohlkörper der Halteschlaufe von Vorder- und/oder Rückwand (6, 8) bildende oder enthaltende zweite flexible Kunststoffmaterialstreifen, auf einem mindestens abschnittweise transparenten Kunststoffmaterial, insbesondere Polyethylen, basiert, das mindestens abschnittsweise innenseitig, insbesondere mittels Konterdruckverfahren, bedruckbar oder bedruckt ist und/oder dass der erste flexible Hohlkörper oder der ein- oder mehrlagige, keinen Hohlkörper bildende Materialstreifen, insbesondere Kunststoffmaterialstreifen, der Halteschlaufe von Vorder- und/oder Rückwand (6, 8) mindestens abschnittsweise außenseitig bedruckbar oder bedruckt ist und dass der zweite flexible Hohlkörper der Halteschlaufe auf einem mindestens abschnittweise transparenten Kunststoffmaterial, insbesondere Polyethylen, basiert oder hieraus besteht.

7. Kunststofftragetasche (1) nach einem der vorangehenden Ansprüche, **dadurch gekennzeichnet, dass**
die Außenlage auf einem mindestens abschnittweise transparenten Kunststoffmaterial, insbesondere Polyethylen, basiert oder hieraus besteht, das mindestens abschnittsweise innenseitig, insbesondere mittels Konterdruckverfahren, bedruckbar oder bedruckt ist und/oder dass die mindestens eine innenliegende Lage, insbesondere die Innenlage, mindestens abschnittsweise außenseitig bedruckbar oder bedruckt ist und dass die Außenlage auf einem mindestens abschnittweise transparenten Kunststoffmaterial, insbesondere Polyethylen, basiert oder hieraus besteht.

8. Kunststofftragetasche (1) nach Anspruch 2 oder nach einem der Ansprüche 3 bis 7, sofern und soweit direkt oder indirekt auf den Anspruch 2 rückbezogen, **dadurch gekennzeichnet, dass**
der flexible Hohlkörper einen schlauchförmigen Hohlkörper darstellt.

9. Kunststofftragetasche (1) nach einem der vorangehenden Ansprüche, **dadurch gekennzeichnet, dass**
die Außenlagen von Vorder- und Rückwand (8) einstückig ausgebildet sind und/oder dass die Innenlagen von Vorder- und Rückwand (8) einstückig ausgebildet sind.

10. Kunststofftragetasche (1) nach einem der vorangehenden Ansprüche, **dadurch gekennzeichnet, dass**
die Außenlage, der mehrlagige, insbesondere doppellagige, Kunststofffolienstreifen des Verstärkungsbereichs in Form des Fortsetzungsabschnitts der Außenlagen und die mindestens eine innenliegende Lage, insbesondere die Innenlage, von Vorder- und/oder Rückwand (6, 8) sowie gegebenenfalls die mit der Vorderwand (6) und/oder mit der Rückwand (8) verbundenen Halteschlaufen, insbesondere deren erste und/oder zweite flexible Kunststoffmaterialstreifen und/oder der ein- oder mehrlagige, keinen Hohlkörper bildende Materialstreifen, aus Polyolefinen, insbesondere Polyethylen, gebildet sind oder bestehen.

11. Kunststofftragetasche (1) nach Anspruch 10, **dadurch gekennzeichnet, dass** die mindestens eine innenliegende Lage, insbesondere die Innenlage, von Vorder- und/oder Rückwand (6, 8) eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt, und/oder dass
der erste flexible Hohlkörper oder der ein- oder mehrlagige, keinen Hohlkörper bildende Materialstreifen eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt, und wobei vorzugsweise die Außenlage von Vorder- und/oder Rückwand (6, 8) eine nicht geschäumte Kunststofffolie, vorzugsweise eine nicht geschäumte Polyolefinfolie, besonders bevorzugt eine nicht geschäumte Polyethylenfolie und insbesondere eine nicht geschäumte LD-Polyethylenfolie, darstellt und/oder wobei vorzugsweise der zweite flexible Hohlkörper, insbesondere der zweite flexible Kunststoffmaterialstreifen, auf einer nicht geschäumten Kunststofffolie, vorzugsweise einer nicht geschäumten Polyolefinfolie, besonders bevorzugt einer nicht geschäumten Polyethylenfolie und insbesondere eine nicht geschäumte LD-Polyethylenfolie, basiert oder hieraus gebildet ist.

12. Kunststofftragetasche (1) nach Anspruch 2 oder nach einem der Ansprüche 3 bis 11, sofern und soweit direkt oder indirekt auf den Anspruch 2 rückbezogen, **dadurch gekennzeichnet, dass**
die mit der Vorderwand (6) und/oder die mit der Rückwand (8) innenseitig verbundene Halteschlaufe jeweils in ihren ersten und zweiten Anbindungsbereichen, direkt oder indirekt, mit dem mehrlagigen Kunststofffolienstreifen des Verstärkungsbereichs und mit der mindestens einen innenliegenden Lage und der Außenlage, verschweißt ist, wobei in diesen ersten und zweiten Anbindungsbereichen zumindest die Innenseite des zweiten Hohlkörpers der Halteschlaufe, insbesondere die nach innen gewandte Seite des zweiten flexiblen Kunststoffmaterialstreifens, mit der Außenseite des ersten Hohlkörpers oder der zugewandten Seite des ein- oder mehrlagigen, keinen Hohlkörper bildenden Materialstreifens, insbesondere der nach außen gewandten Seite des ersten flexiblen Kunststoffmaterialstreifens, verschweißt vorliegen.

13. Kunststofftragetasche (1) nach einem der vorangehenden Ansprüche, **dadurch gekennzeichnet, dass**
die Außenlage, der mehrlagige, insbesondere doppellagige, Kunststofffolienstreifen des Verstärkungsbereichs, insbesondere der Fortsetzungsabschnitt der Außenlage, und die mindestens eine innenliegende Lage, insbesondere die Innenlage, von Vorder- und Rückwand (8) sowie gegebenenfalls die mit der Vorderwand (6) und mit der Rückwand (8) verbundenen Halteschlaufen, insbesondere deren erste und/oder zweite flexible Kunststoffmaterialstreifen oder deren ein- oder mehrlagiger, keinen Hohlkörper bildender Materialstreifen, aus Polyethylen, insbesondere LD-Polyethylen, gebildet sind oder bestehen, wobei die mindestens eine innenliegende Lage, insbesondere die Innenlage, von Vorder- und Rückwand (8) eine geschäumte Polyethylenfolie, insbesondere eine geschäumte LD-Polyethylenfolie, darstellt, und wobei die Außenlage von Vorder- und/oder Rückwand (6, 8), und gegebenenfalls der mehrlagige Kunststofffolienstreifen des Verstärkungsbereichs, eine nicht geschäumte Polyethylenfolie, insbesondere eine nicht geschäumte LD-Polyethylenfolie, darstellt.

## Claims

1. Plastic carrier bag (1) with a closed or substantially closed bottom end (2) and an opposite opening end (4), comprising a front wall (6) and a rear wall (8), each with a first side edge (10) and an opposite second side edge (12) as well as an opening edge (14) and a bottom edge (16), wherein the front wall (6) and the rear wall (8) are connected to one another in the region of their first and second side edges (10, 12) and their bottom edges (16) at least in sections directly or via side walls and/or side folds and/or a bottom fold (18), as well as at least one holding loop (20, 22) connected to the front wall (6) and/or at least one holding loop connected to the rear wall (8), each with a first and a second connecting region (24A, 24B; 26A, 26B), wherein the front and rear wall (6, 8) are configured in multiple layers, comprising at least one inner layer and an outer layer (28, 30; 32, 34),
wherein
the front and rear wall (6, 8) in the region of the opening end (4) have a reinforcing region (44, 46) extending up to the opening end or comprising the same, containing at least one multi-layer plastic film strip fastened on the inside to the front wall (6) and at least one multi-layer plastic film strip fastened on the inside to the rear wall (8) and extending from or spaced apart from the first side edge (10) in the direction of or up to the second side edge (12),
wherein a continuing section (36, 38) adjoins the outer layer (30, 34),
wherein the outer layer (30, 34) and the continuing section (36, 38) of the front wall (6) and the rear wall (8) are formed in one piece,
wherein the continuing section represents the plastic film strip of the reinforcing region,
wherein the continuing section (36, 38) extends at least in sections along the inner side of the at least one inner layer (28, 32) and abuts against the same,
wherein the continuing section (36, 38) present on the inner side of the at least one inner layer (28, 32) is configured at least in two layers at least in regions by means of folding over,
wherein this continuing section (36, 38) is welded to the inner side of the at least one inner layer (28, 32) along an extension from or spaced apart from the first side edge (10) in the direction of or up to the second side edge (12),
wherein the first and second connecting regions of the holding loop connected to the front wall (6) and the first and second connecting regions of the holding loop connected to the rear wall (8) are present on the inner side of the front or rear wall (8) in the region of the multi-layer plastic film strip of the reinforcing region,
wherein the multi-layer plastic film strip of the reinforcing region of the front and rear wall (6, 8) is welded via all its layers to the inner side of the at least one inner layer along the extension from or spaced apart from the first side edge in the direction of or up to the second side edge, forming a first connecting strip,
wherein the outer layer of the front and rear wall (6, 8) is welded to the outer side of the at least one inner layer along the extension from or spaced apart from the first side edge in the direction of or up to the second side edge, forming a second connecting strip,
wherein the first and second connecting regions of the holding loops connected to the front wall (6) and to the rear wall (8) are present spaced apart from the first or second connecting strip,
wherein the first and the second connecting strip are present at least in sections substantially overlapping,
wherein the holding loop connected to the front wall (6) and to the rear wall (8) is welded in each case in its first and second connecting regions to the multi-layer plastic film strip of the reinforcing region and also to the at least one inner layer and the outer layer,
wherein the first connecting strip is present spaced apart closer to the lower edge of the reinforcing region than to its upper edge, and
wherein the second connecting strip is present spaced apart closer to the lower edge of the reinforcing region than to its upper edge.

2. Plastic carrier bag (1) according to claim 1, **characterised in that**
the holding loop (20) connected to the front wall (6) via its first and second connecting regions (24A, 24B) and/or the holding loop (22) connected to the rear wall (8) via its first and second connecting regions (26A, 26B) has in the region from the respective first to the second connecting region at least in sections a first flexible hollow body and/or a single- or multi-layer material strip, in particular plastic material strip, which does not form a hollow body and which is enveloped at least in sections or substantially completely by a second flexible hollow body.

3. Plastic carrier bag (1) according to claim 1 or 2, **characterised in that** the multi-layer plastic film strip of the reinforcing region of the front wall is fastened to the inner layer from or spaced apart from the first side edge in the direction of or up to the second side edge by means of thermoplastic welding and/or that
the multi-layer plastic film strip of the reinforcing region of the rear wall is fastened to the inner layer from or spaced apart from the first side edge in the direction of or up to the second side edge by means of thermoplastic welding.

4. Plastic carrier bag (1) according to claim 2 or 3, insofar and so far as referred back to claim 2, **characterised in that**
the first flexible hollow body is formed from a first flexible plastic material strip with opposite first and second longitudinal side edges, the opposite first and second longitudinal side edges of which are welded to one another in an overlapping region and/or that
the second flexible hollow body is formed from a second flexible plastic material strip with opposite first and second longitudinal side edges, the opposite first and second longitudinal side edges of which are welded to one another in a second overlapping region.

5. Plastic carrier bag (1) according to claim 2 or claim 3, insofar and so far as referred back to claim 2, or claim 4, insofar and so far as referred back directly or indirectly to claim 3, **characterised in that**
the first flexible hollow body is formed from a first flexible plastic material strip with opposite first and second longitudinal side edges and that the second flexible hollow body is formed from a second flexible plastic material strip with opposite first and second longitudinal side edges,
wherein in the overlapping region of first and second longitudinal side edges of the first flexible plastic material strip the first longitudinal side edge of the first plastic material strip is welded to the first longitudinal side edge of the second material strip and this first longitudinal side edge of the second plastic material strip is welded to the second longitudinal side edge of the first plastic material strip and
wherein in the overlapping region of first and second longitudinal side edges of the second flexible plastic material strip the second longitudinal side edge of the first plastic material strip is welded to the second longitudinal side edge of the second material strip and this second longitudinal side edge of the first plastic material strip is welded to the first longitudinal side edge of the second plastic material strip.

6. Plastic carrier bag (1) according to claim 2 or according to one of claims 3 to 5, insofar and so far as referred back directly or indirectly to claim 2, **characterised in that**
the second flexible hollow body of the holding loop of the front and/or rear wall (6, 8), in particular the second flexible plastic material strip forming or containing the second flexible, in particular tubular, hollow body of the holding loop of the front and/or rear wall (6, 8), is based on a plastic material which is transparent at least in sections, in particular polyethylene, and which can be printed or is printed at least in sections on the inside, in particular by means of reverse printing processes and/or that
the first flexible hollow body or the single-layer or multiple-layer material strip, in particular plastic material strip, of the holding loop of front and/or rear wall (6, 8) not forming a hollow body can be printed or is printed at least in sections on the outside and that the second flexible hollow body of the holding loop is based on or consists of a plastic material which is transparent at least in sections, in particular polyethylene.

7. Plastic carrier bag (1) according to one of the preceding claims, **characterised in that**
the outer layer is based on or consists of a plastic material which is transparent at least in sections, in particular polyethylene, and which can be printed or is printed at least in sections on the inside, in particular by means of reverse printing processes and/or that
the at least one inner layer, in particular the inner layer, can be printed or is printed at least in sections on the outside and that the outer layer is based on or consists of a plastic material which is transparent at least in sections, in particular polyethylene.

8. Plastic carrier bag (1) according to claim 2 or according to one of claims 3 to 7, insofar and so far as referred back directly or indirectly to claim 2, **characterised in that**
the flexible hollow body represents a tubular hollow body.

9. Plastic carrier bag (1) according to one of the preceding claims, **characterised in that**
the outer layers of the front and rear wall (8) are formed in one piece and/or that the inner layers of the front and rear wall (8) are formed in one piece.

10. Plastic carrier bag (1) according to one of the preceding claims, **characterised in that**
the outer layer, the multi-layer, in particular double-layer, plastic film strip of the reinforcing region in the form of the continuing section of the outer layers and the at least one inner layer, in particular the inner layer, of front and/or rear wall (6, 8) as well as optionally the holding loops connected to the front wall (6) and/or to the rear wall (8), in particular the first and/or second flexible plastic material strip thereof and/or the single-layer or multiple-layer material strip not forming a hollow body, are formed or consist of polyolefins, in particular polyethylene.

11. Plastic carrier bag (1) according to claim 10, **characterised in that**
the at least one inner layer, in particular the inner layer, of front and/or rear wall (6, 8) comprises or represents a foamed plastic film, preferably a foamed polyolefin film, particularly preferably a foamed polyethylene film and in particular a foamed LD polyethylene film, and/or that
the first flexible hollow body or the single-layer or multiple-layer material strip not forming a hollow body comprises or represents a foamed plastic film, preferably a foamed polyolefin film, particularly preferably a foamed polyethylene film and in particular a foamed LD polyethylene film,
and wherein preferably the outer layer of front and/or rear wall (6, 8) represents a non-foamed plastic film, preferably a non-foamed polyolefin film, particularly preferably a non-foamed polyethylene film and in particular a non-foamed LD polyethylene film and/or wherein preferably the second flexible hollow body, in particular the second flexible plastic material strip, is based on or formed from a non-foamed plastic film, preferably a non-foamed polyolefin film, particularly preferably a non-foamed polyethylene film and in particular a non-foamed LD polyethylene film.

12. Plastic carrier bag (1) according to claim 2 or according to one of claims 3 to 11, insofar and so far as referred back directly or indirectly to claim 2, **characterised in that**
the holding loop connected to the front wall (6) and/or to the rear wall (8) on the inner side is welded in each case in its first and second connecting regions, directly or indirectly, to the multi-layer plastic film strip of the reinforcing region and to the at least one inner layer and the outer layer, wherein in these first and second connecting regions at least the inner side of the second hollow body of the holding loop, in particular the inwardly facing side of the second flexible plastic material strip, is present welded to the outer side of the first hollow body or the facing side of the single-layer or multiple-layer material strip not forming a hollow body, in particular the outwardly facing side of the first flexible plastic material strip.

13. Plastic carrier bag (1) according to one of the preceding claims, **characterised in that**
the outer layer, the multi-layer, in particular double-layer, plastic film strip of the reinforcing region, in particular the continuing section of the outer layer, and the at least one inner layer, in particular the inner layer, of front and rear wall (8) as well as optionally the holding loops connected to the front wall (6) and to the rear wall (8), in particular the first and/or second flexible plastic material strip thereof or the single-layer or multiple-layer material strip not forming a hollow body thereof, are formed or consist of polyethylene, in particular LD polyethylene, wherein the at least one inner layer, in particular the inner layer, of front and rear wall (8) represents a foamed polyethylene film, in particular a foamed LD polyethylene film, and wherein the outer layer of front and/or rear wall (6, 8), and optionally the multi-layer plastic film strip of the reinforcing region, represents a non-foamed polyethylene film, in particular a non-foamed LD polyethylene film.

## Revendications

1. Sac de transport en matière plastique (1) avec une extrémité de fond fermée ou essentiellement fermée (2) et une extrémité d'ouverture opposée (4), comprenant une paroi avant (6) et une paroi arrière (8), chacune avec un premier bord latéral (10) et un deuxième bord latéral opposé (12) ainsi qu'un bord d'ouverture (14) et un bord de fond (16), dans lequel la paroi avant (6) et la paroi arrière (8) sont reliées l'une à l'autre dans la zone de leurs premier et deuxième bords latéraux (10, 12) et de leurs bords de fond (16) au moins en partie directement ou par l'intermédiaire de parois latérales et/ou de plis latéraux et/ou d'un pli de fond (18), ainsi qu'au moins une boucle de retenue (20, 22) reliée à la paroi avant (6) et/ou au moins une boucle de retenue reliée à la paroi arrière (8) avec respectivement une première et une deuxième zone de liaison (24A, 24B ; 26A, 26B),
dans lequel la paroi avant et la paroi arrière (6, 8) sont conçues en plusieurs couches, comprenant au moins une couche intérieure et une couche extérieure (28, 30 ; 32, 34),
dans lequel
la paroi avant et la paroi arrière (6, 8) présentent dans la zone de l'extrémité d'ouverture (4) une zone de renforcement (44, 46) s'étendant jusqu'à l'extrémité d'ouverture ou comprenant celle-ci, contenant au moins une bande de matière plastique multicouche fixée du côté intérieur à la paroi avant (6) et au moins une bande de matière plastique multicouche fixée du côté intérieur à la paroi arrière (8) et s'étendant depuis ou à distance du premier bord latéral (10) en direction du ou jusqu'au deuxième bord latéral (12),
dans lequel une section de prolongement (36, 38) se raccorde à la couche extérieure (30, 34),
dans lequel la couche extérieure (30, 34) et la section de prolongement (36, 38) de la paroi avant (6) et de la paroi arrière (8) sont réalisées d'une seule pièce,
dans lequel la section de prolongement représente la bande de matière plastique de la zone de renforcement,
dans lequel la section de prolongement (36, 38) s'étend au moins par sections le long du côté intérieur de l'au moins une couche intérieure (28, 32) et s'applique contre celle-ci,
dans lequel la section de prolongement (36, 38) présente sur le côté intérieur de l'au moins une couche intérieure (28, 32) est conçue au moins en deux couches au moins par zones par retournement,
dans lequel cette section de prolongement (36, 38) est soudée le long d'une extension depuis ou à distance du premier bord latéral (10) en direction du ou jusqu'au deuxième bord latéral (12) au côté intérieur de l'au moins une couche intérieure (28, 32),
dans lequel les première et deuxième zones de liaison de la boucle de retenue reliée à la paroi avant (6) et les première et deuxième zones de liaison de la boucle de retenue reliée à la paroi arrière (8) sont présentes sur le côté intérieur de la paroi avant ou de la paroi arrière (8) dans la zone de la bande de matière plastique multicouche de la zone de renforcement,
dans lequel la bande de matière plastique multicouche de la zone de renforcement de la paroi avant et de la paroi arrière (6, 8) est soudée par toutes ses couches au côté intérieur de l'au moins une couche intérieure le long de l'extension depuis ou à distance du premier bord latéral en direction du ou jusqu'au deuxième bord latéral en formant une première bande de liaison,
dans lequel la couche extérieure de la paroi avant et de la paroi arrière (6, 8) est soudée au côté extérieur de l'au moins une couche intérieure le long de l'extension depuis ou à distance du premier bord latéral en direction du ou jusqu'au deuxième bord latéral en formant une deuxième bande de liaison,
dans lequel les première et deuxième zones de liaison des boucles de retenue reliées à la paroi avant (6) et à la paroi arrière (8) sont présentes à distance de la première ou de la deuxième bande de liaison,
dans lequel la première et la deuxième bande de liaison sont présentes au moins par sections essentiellement en chevauchement,
dans lequel la boucle de retenue reliée à la paroi avant (6) et la boucle de retenue reliée à la paroi arrière (8) sont soudées respectivement dans leurs première et deuxième zones de liaison à la bande de matière plastique multicouche de la zone de renforcement et également à l'au moins une couche intérieure et à la couche extérieure,
dans lequel la première bande de liaison est présente à une distance plus proche du bord inférieur de la zone de renforcement que de son bord supérieur et
dans lequel la deuxième bande de liaison est présente à une distance plus proche du bord inférieur de la zone de renforcement que de son bord supérieur.

2. Sac de transport en matière plastique (1) selon la revendication 1, **caractérisé en ce que**
la boucle de retenue (20) reliée à la paroi avant (6) par l'intermédiaire de ses première et deuxième zones de liaison (24A, 24B) et/ou la boucle de retenue (22) reliée à la paroi arrière (8) par l'intermédiaire de ses première et deuxième zones de liaison (26A, 26B) présente dans la zone de la première à la deuxième zone de liaison respective au moins par sections un premier corps creux flexible et/ou une bande de matière mono- ou multicouche ne formant pas de corps creux, en particulier une bande de matière plastique, qui est enveloppée au moins par sections ou essentiellement complètement par un deuxième corps creux flexible.

3. Sac de transport en matière plastique (1) selon la revendication 1 ou 2, **caractérisé en ce que** la bande de matière plastique multicouche de la zone de renforcement de la paroi avant est fixée à la couche intérieure depuis ou à distance du premier bord latéral en direction du ou jusqu'au deuxième bord latéral au moyen d'un soudage thermoplastique et/ou **en ce que**
la bande de matière plastique multicouche de la zone de renforcement de la paroi arrière est fixée à la couche intérieure depuis ou à distance du premier bord latéral en direction du ou jusqu'au deuxième bord latéral au moyen d'un soudage thermoplastique.

4. Sac de transport en matière plastique (1) selon la revendication 2 ou 3, si et dans la mesure où elle se rapporte à la revendication 2, **caractérisé en ce que**
le premier corps creux flexible est formé d'une première bande de matière plastique flexible avec des premier et deuxième bords latéraux longitudinaux opposés, dont les premier et deuxième bords latéraux longitudinaux opposés sont soudés l'un à l'autre dans une zone de chevauchement et/ou **en ce que**
le deuxième corps creux flexible est formé d'une deuxième bande de matière plastique flexible avec des premier et deuxième bords latéraux longitudinaux opposés, dont les premier et deuxième bords latéraux longitudinaux opposés sont soudés l'un à l'autre dans une deuxième zone de chevauchement.

5. Sac de transport en matière plastique (1) selon la revendication 2 ou la
revendication 3, si et dans la mesure où elle se rapporte à la revendication 2, ou la revendication 4, si et dans la mesure où elle se rapporte directement ou indirectement à la revendication 3, **caractérisé en ce que**
le premier corps creux flexible est formé d'une première bande de matière plastique flexible avec des premier et deuxième bords latéraux longitudinaux opposés et **en ce que** le deuxième corps creux flexible est formé d'une deuxième bande de matière plastique flexible avec des premier et deuxième bords latéraux longitudinaux opposés,
dans lequel, dans la zone de chevauchement des premier et deuxième bord latéral longitudinal de la première bande de matière plastique flexible, le premier bord latéral longitudinal de la première bande de matière plastique est soudé au premier bord latéral longitudinal de la deuxième bande de matière et ce premier bord latéral longitudinal de la deuxième bande de matière plastique est soudé au deuxième bord latéral longitudinal de la première bande de matière plastique et
dans lequel, dans la zone de chevauchement des premier et deuxième bord latéral longitudinal de la deuxième bande de matière plastique flexible, le deuxième bord latéral longitudinal de la première bande de matière plastique est soudé au deuxième bord latéral longitudinal de la deuxième bande de matière et ce deuxième bord latéral longitudinal de la première bande de matière plastique est soudé au premier bord latéral longitudinal de la deuxième bande de matière plastique.

6. Sac de transport en matière plastique (1) selon la revendication 2 ou selon l'une quelconque des revendications 3 à 5, si et dans la mesure où elle se rapporte directement ou indirectement à la revendication 2, **caractérisé en ce que** le deuxième corps creux flexible de la boucle de retenue de la paroi avant et/ou arrière (6, 8), en particulier la deuxième bande de matière plastique flexible formant ou contenant le deuxième corps creux flexible, en particulier en forme de tuyau, de la boucle de retenue de la paroi avant et/ou arrière (6, 8), est à base d'une matière plastique transparente au moins par sections, en particulier du polyéthylène, qui peut être imprimée ou est imprimée au moins par sections du côté intérieur, en particulier au moyen d'un procédé de contre-impression et/ou **en ce que** le premier corps creux flexible ou la bande de matière monocouche ou multicouche ne formant pas de corps creux, en particulier la bande de matière plastique, de la boucle de retenue de la paroi avant et/ou arrière (6, 8) peut être imprimée ou est imprimée au moins par sections du côté extérieur et **en ce que** le deuxième corps creux flexible de la boucle de retenue est à base ou est constitué d'une matière plastique transparente au moins par sections, en particulier de polyéthylène.

7. Sac de transport en matière plastique (1) selon l'une quelconque des revendications précédentes, **caractérisé en ce que**
la couche extérieure est à base ou est constituée d'une matière plastique transparente au moins par sections, en particulier de polyéthylène, qui peut être imprimée ou est imprimée au moins par sections du côté intérieur, en particulier au moyen d'un procédé de contre-impression et/ou **en ce que**
l'au moins une couche intérieure, en particulier la couche intérieure, peut être imprimée ou est imprimée au moins par sections du côté extérieur et **en ce que** la couche extérieure est à base ou est constituée d'une matière plastique transparente au moins par sections, en particulier de polyéthylène.

8. Sac de transport en matière plastique (1) selon la revendication 2 ou selon l'une quelconque des revendications 3 à 7, si et dans la mesure où elle se rapporte directement ou indirectement à la revendication 2, **caractérisé en ce que** le corps creux flexible représente un corps creux tubulaire.

9. Sac de transport en matière plastique (1) selon l'une quelconque des revendications précédentes, **caractérisé en ce que**
les couches extérieures de la paroi avant et de la paroi arrière (8) sont réalisées d'une seule pièce et/ou **en ce que** les couches intérieures de la paroi avant et de la paroi arrière (8) sont réalisées d'une seule pièce.

10. Sac de transport en matière plastique (1) selon l'une quelconque des revendications précédentes, **caractérisé en ce que**
la couche extérieure, la bande de matière plastique multicouche, en particulier à deux couches, de la zone de renforcement sous la forme de la section de prolongement des couches extérieures et l'au moins une couche intérieure, en particulier la couche intérieure, de la paroi avant et/ou arrière (6, 8) ainsi qu'éventuellement les boucles de retenue reliées à la paroi avant (6) et/ou à la paroi arrière (8), en particulier leur première et/ou deuxième bande de matière plastique flexible et/ou la bande de matière monocouche ou multicouche ne formant pas de corps creux, sont formées ou sont constituées de polyoléfines, en particulier de polyéthylène.

11. Sac de transport en matière plastique (1) selon la revendication 10, **caractérisé en ce que**
l'au moins une couche intérieure, en particulier la couche intérieure, de la paroi avant et/ou arrière (6, 8) comprend ou représente une matière plastique expansée, de préférence un film en polyoléfine expansé, de manière particulièrement préférée un film de polyéthylène expansé et en particulier un film de polyéthylène LD expansé, et/ou **en ce que**
le premier corps creux flexible ou la bande de matière monocouche ou multicouche ne formant pas de corps creux comprend ou représente une matière plastique expansée, de préférence un film en polyoléfine expansé, de manière particulièrement préférée un film de polyéthylène expansé et en particulier un film de polyéthylène LD expansé,
et dans lequel de préférence la couche extérieure de la paroi avant et/ou arrière (6, 8) représente une matière plastique non expansée, de préférence un film en polyoléfine non expansé, de manière particulièrement préférée un film de polyéthylène non expansé et en particulier un film de polyéthylène LD non expansé, et/ou dans lequel de préférence le deuxième corps creux flexible, en particulier la deuxième bande de matière plastique flexible, est à base ou est formée d'une matière plastique non expansée, de préférence d'un film en polyoléfine non expansé, de manière particulièrement préférée d'un film de polyéthylène non expansé et en particulier d'un film de polyéthylène LD non expansé.

12. Sac de transport en matière plastique (1) selon la revendication 2 ou selon l'une quelconque des revendications 3 à 11, si et dans la mesure où elle se rapporte directement ou indirectement à la revendication 2, **caractérisé en ce que** la boucle de retenue reliée à la côté intérieur de la paroi avant (6) et/ou la boucle de retenue reliée à la côté intérieur de la paroi arrière (8) sont soudées respectivement dans leurs première et deuxième zones de liaison, directement ou indirectement, à la bande de matière plastique multicouche de la zone de renforcement et à l'au moins une couche intérieure et à la couche extérieure, dans lequel dans ces première et deuxième zones de liaison au moins le côté intérieur du deuxième corps creux de la boucle de retenue, en particulier le côté tourné vers l'intérieur de la deuxième bande de matière plastique flexible, sont soudés au côté extérieur du premier corps creux ou au côté tourné vers celui de la bande de matière monocouche ou multicouche ne formant pas de corps creux, en particulier au côté tourné vers l'extérieur de la première bande de matière plastique flexible.

13. Sac de transport en matière plastique (1) selon l'une quelconque des revendications précédentes, **caractérisé en ce que**
la couche extérieure, la bande de matière plastique multicouche, en particulier à deux couches, de la zone de renforcement, en particulier la section de prolongement de la couche extérieure, et l'au moins une couche intérieure, en particulier la couche intérieure, de la paroi avant et arrière (8) ainsi qu'éventuellement les boucles de retenue reliées à la paroi avant (6) et à la paroi arrière (8), en particulier leur première et/ou deuxième bande de matière plastique flexible ou leur bande de matière monocouche ou multicouche ne formant pas de corps creux, sont formées ou sont constituées de polyéthylène, en particulier de polyéthylène LD, dans lequel l'au moins une couche intérieure, en particulier la couche intérieure, de la paroi avant et arrière (8) représente un film de polyéthylène expansé, en particulier un film de polyéthylène LD expansé, et dans lequel la couche extérieure de la paroi avant et/ou arrière (6, 8), et éventuellement la bande de matière plastique multicouche de la zone de renforcement, représente un film de polyéthylène non expansé, en particulier un film de polyéthylène LD non expansé.
